# EUROPÄISCHE PATENTSCHRIFT

(11) **EP 1 916 628 B1**
(45) Veröffentlichungstag und Bekanntmachung des Hinweises auf die Patenterteilung: **19.11.2014**
(21) Anmeldenummer: 06022478.9
(22) Anmeldetag: 27.10.2006
(51) Int. Cl.: G07B 17/00, G06Q 10/08, G06Q 10/10, G06Q 50/28, G06Q 50/32

(54) **Verfahren zum Erzeugen eines intelligenten Dokuments und Vorrichtung zur Durchführung des Verfahrens**
Method for creating an intelligent document and device for carrying out the method
Procédé destiné à la production d'un document intelligent et dispositif destiné à l'exécution du procédé

(43) Veröffentlichungstag der Anmeldung: 30.04.2008
(73) Patentinhaber: Deutsche Post AG, 53113 Bonn (DE)
(72) Erfinder: Endruscheit, Henning, 52399 Merzenich (DE); Klös, Volker, 35428 Langgons (DE); Ogilvie, Thomas, 53179 Bonne (DE); Mayer, Boris, 53129 Bonn (DE)
(74) Vertreter: Jostarndt, Hans-Dieter

(56) Entgegenhaltungen:
- EP-B1- 0 717 374
- WO-A-01/35346
- WO-A-2005/029265
- DE-A1-102004 046 051
- P.A. HENNING, H. VOGELSANG: "Taschenbuch Programmiersprachen" 2004, FACHBUCHVERLAG LEIPZIG IM CARL HANSER VERLAG , LEIPZIG , XP007901853 ISBN: 3-446-22580-3 * Seite 297 - Seite 315 *
- S. FESLER KAMINARIS, J. ANNUNZIATO: "Jetzt lerne ich JavaServer Pages" 2001, MARKT + TECHNIK VERLAG , MÜNCHEN , XP007901852 ISBN: 3-8272-6009-4 * Seite 264 - Seite 273 *
- GEORGE BEEKMAN: "Computer Confluence" 2003, PRENTICE HALL, INC. , NEW JERSEY , XP007901860 ISBN: 0-13-066188-0 * Seite 265 - Seite 286 *

## Beschreibung

### Technisches Gebiet

Die Erfindung betrifft ein Verfahren zum Erzeugen eines intelligenten Dokuments. Die Erfindung betrifft ferner eine Vorrichtung zum Erzeugen eines intelligenten Dokuments, die zur Durchführung des Verfahrens geeignet ist.

### Hintergrund und Stand der Technik

Aus der deutschen Patentanmeldung DE 10 2004 046 051 A1 ist es bekannt, Frankiervermerke, die in einem zentralen Server erzeugt werden, einer Bedieneinheit über ein Netzwerk unter Verwendung eines intelligenten Dokuments bereitzustellen. Intelligente Dokumente enthalten neben Text- und Grafikelementen eine Prozesslogik, die es erlaubt, den Inhalt des Dokuments zu verändern und vorgegebene Prozesse auszuführen. Insbesondere sieht das bekannte Verfahren vor, den Druck eines in einem derartigen intelligenten Dokument enthaltenden Frankiervermerks in einer zentralen Datenbank zu protokollieren und vor dem Druck zu ermitteln, ob der Frankiervermerk bereits einmal ausgedruckt worden ist. Ist dies der Fall, wird der Druck nicht ermöglicht, so dass ein in missbräuchlicher Absicht durchgeführter Mehrfachdruck des Frankiervermerks verhindert wird. Die Protokollierung des Drucks und die Prüfungsschritte werden mittels der Prozesslogik des intelligenten Dokuments vorgenommen, die insbesondere die Kommunikation zwischen der Bedieneinheit und der zentralen Datenbank steuert. Zur Ausführung der Prozesslogik wird eine Programmausführungsumgebung benötigt, die in einem Darstellungsprogramm enthalten ist, das in der Bedieneinheit des Kunden ausgeführt wird und so ausgelegt ist, dass es gewöhnliche und intelligente Dokumente darstellen und interpretieren kann. Ein Beispiel für ein derartiges Darstellungsprogramm ist der "Adobe Reader" der Firma Adobe, der in neueren Versionen neben herkömmlichen PDF-Dokumenten (PDF: Portable Document Format) auch intelligente PDF-Dokumente verarbeiten kann.

### Darstellung der Erfindung

Es ist wünschenswert, eine schnelle und zuverlässige Erzeugung eines intelligenten Dokuments zu ermöglichen.

Erfindungsgemäß wird diese Aufgabe durch ein Verfahren mit den Merkmalen des Patentanspruchs 1, durch ein Computerprogrammprodukt nach Anspruch 15 sowie durch eine Vorrichtung mit den Merkmalen des Anspruchs 16 gelöst.

Dieses erfindungsgemäße Verfahren ist zum Erzeugen eines intelligenten Dokuments auf einem Server umfassend eine Datenbank zum Protokollieren eines Vermerks über einen Druck eines Frankiervermerks, wobei die Datenbank jeweils einen Eintrag für jeden erzeugten und an einen Client übermittelten Frankiervermerk umfasst, und wobei das intelligente Dokument ein Programm umfasst, das bei Vorliegen einer Voraussetzung mittels einer in einem Darstellungsprogramm enthaltenen Programmausführungsumgebung ausführbar ist und das mittels des Darstellungsprogramms darstellbare Inhalte zum Darstellen auf einer Anzeigeeinrichtung des Clients enthält, wobei die Inhalte aus statischen Inhalten und dynamischen Inhalten bestehen und von dem Server über ein Netzwerk an den Client getrennt voneinander übermittelt werden, vorgesehen und ist dadurch gekennzeichnet, dass ein Einbringen der dynamischen Inhalte in das intelligente Dokument von einem Einbringen der statischen Inhalte getrennt erfolgt, wobei bereits bei Erzeugung des intelligenten Dokuments eine darstellbare Angabe eines negativen Ergebnisses eines Prüfungsschritts, ob die Programmausführungsumgebung zur Verfügung steht, in das intelligente Dokument eingebracht wird, dass ein Programmmodul in das intelligente Dokument eingebracht wird, wobei das Programmmodul nach dem Öffnen des intelligenten Dokuments in dem Darstellungsprogramm bei vorhandener Programmausführungsumgebung automatisch gestartet wird, dass die Prüfung, ob die Programmausführungsumgebung zur Verfügung steht, dadurch durchgeführt wird, dass das Programmmodul ausgeführt werden kann oder nicht, und dass das Programmmodul die Angabe des negativen Ergebnisses des Prüfungsschritts in die Angabe einer erfolgreichen Durchführung des Prüfungsschritts umwandelt, wenn das Programmmodul ausgeführt wird, wobei bei Fehlen der Programmausführungsumgebung die darstellbare Angabe eines negativen Ergebnisses in dem Darstellungsprogramm auf der Anzeigeeinrichtung des Client angezeigt wird.

Die erfindungsgemäße Vorrichtung zur Durchführung des erfindungsgemäßen Verfahrens zum Erzeugen eines intelligenten Dokuments auf einem Server umfassend eine Datenbank zum Protokollieren eines Vermerks über einen Druck eines Frankiervermerks, wobei die Datenbank jeweils einen Eintrag für jeden erzeugten und an einen Client übermittelten Frankiervermerk umfasst, umfasst dazu ein Programm, das bei Vorliegen einer Voraussetzung mittels einer in einem Darstellungsprogramm enthaltenen Programmausführungsumgebung ausführbar ist, und das mittels des Darstellungsprogramms darstellbare Inhalte zum Darstellen auf einer Anzeigeeinrichtung eines Clients enthält, wobei die Inhalte aus statischen Inhalten und dynamischen Inhalten bestehen und von dem Server über ein Netzwerk an den Client getrennt voneinander übermittelt werden, wobei die Vorrichtung dazu eingerichtet ist, ein Programmmodul, das nach dem Öffnen des intelligenten Dokuments in dem Darstellungsprogramm bei vorhandener Programmausführungsumgebung automatisch gestartet wird, in das intelligente Dokument einzubringen, das dazu ausgebildet ist, eine darstellbare Angabe eines Ergebnisses eines Prüfungsschritts zur Prüfung des Vorliegens der Voraussetzung innerhalb des intelligenten Dokuments zu erzeugen, wobei bereits bei Erzeugung des intelligenten Dokuments die darstellbare Angabe eines negativen Ergebnisses des Prüfungsschritts, ob die Programmausführungsumgebung zur Verfügung steht, in das intelligente Dokument eingebracht wird und die Prüfung, dadurch durchgeführt wird, dass das Programmmodul ausgeführt werden kann oder nicht und dass das Programmmodul die Angabe des negativen Ergebnisses des Prüfungsschritts in die Angabe einer erfolgreichen Durchführung des Prüfungsschritts umwandelt, wenn das Programmmodul ausgeführt wird, wobei bei Fehlen der Programmausführungsumgebung die darstellbare Angabe eines negativen Ergebnisses in dem Darstellungsprogramm auf der Anzeigeeinrichtung des Client angezeigt wird.

Ein Einsatz der Erfindung in Systemen zum Erzeugen von Labeln oder anderen Aufdrucken zum Versehen von Postsendungen oder anderen zu transportierenden Gütern ist besonders vorteilhaft.

In diesem Fall ist es besonders vorteilhaft, dass Adressdaten und/oder frankierrelevante Daten Beispiele dynamischer Inhalte im Sinne der Erfindung sind.

Die Erfindung eignet sich jedoch auch für einen Einsatz anderer dynamischer Informationen und in anderen technischen Zusammenhängen, beispielsweise für eine Automatisierung von sonstigen Logistikvorgängen, von Produktionsvorgängen sowie von der Erzeugung und Verarbeitung von Informationen. Besonders vorteilhaft sind Einsatzgebiete, bei denen dynamische Informationen in einem statischen Rahmen wiedergegeben und/oder bearbeitet werden.

Bei den statischen Informationen handelt es sich um Angaben, die insbesondere ein Einbetten von Daten ermöglichen.

Bei den Rahmen kann es sich beispielsweise auch um so genannte Frames handeln.

Ein Frame ist ein Teilbereich einer graphischen Darstellung, insbesondere einer Bildschirmseite, beispielsweise einer grafischen Benutzeroberfläche. Ein einzelnes Segment wird dabei als Frame (englischer Ausdruck für Rahmen) bezeichnet, die Definition aller Frames als Frameset.

Der Einsatz von Frames ermöglicht die parallele Darstellung von mehreren Einzeldokumenten, die sich gegebenenfalls unabhängig voneinander verschieben lassen. Über die Frames lassen sich Inhalte aus unterschiedlichen Quellen bzw. aus verschiedenen Datenquellen miteinander kombinieren.

Ferner können Inlineframes (iframes) eingesetzt werden. Sie erlauben eine besonders einfache Dateneinbindung in eine dargestellte Bildschirmseite.

Demgemäß wird ein Verfahren der eingangs genannten Art geschaffen, bei dem das intelligente Dokument ein Programm umfasst, das bei Vorliegen einer Voraussetzung mittels einer Programmausführungsumgebung ausführbar ist und das mittels eines Darstellungsprogramms darstellbare Inhalte enthält. Erfindungsgemäß wird das Verfahren so durchgeführt, dass zwei verschiedene Arten von Inhalten in das intelligente Dokument eingebracht werden, die aus einer oder mehreren Quellen stammen können.

Bei einer ersten Art von Inhalten handelt es sich um statische Inhalte. Statische Inhalte stimmen vorzugsweise bei mehreren Dokumenten überein.

Bei den statischen Inhalten handelt es sich vorzugsweise um solche Inhalte, die sich für eine Erzeugung mehrerer Dokumente eignen. Eine Erzeugung mehrerer Dokumente ist sehr vorteilhaft, jedoch nicht notwendig.

Bei den statischen Inhalten handelt es sich beispielsweise um Rahmeninformationen für die Erzeugung von Dokumenten oder um andere Informationen, deren Aktualisierung seltener als bei den dynamischen Inhalten, vorzugsweise erst bei Ablauf eines vorgebbaren Zeitintervalls oder bei Erreichen eines Ereignisses, erfolgt. Alternativ ist es möglich, die statischen Daten vollständig unverändert zu lassen.

Ferner wird ein intelligentes Dokument geschaffen, das ein Programm umfasst, das bei Vorliegen einer Voraussetzung mittels einer Programmausführungsumgebung ausführbar ist, und das mittels eines Darstellungsprogramms darstellbare Inhalte enthält. Das intelligente Dokument zeichnet sich dadurch aus, dass ein Programmmodul enthalten ist, das dazu ausgebildet ist, eine darstellbare Angabe eines Ergebnisses des Prüfungsschritts zur Prüfung des Vorliegens der Voraussetzung innerhalb des intelligenten Dokuments zu erzeugen.

Eine Ausführungsform der Erfindung sieht vor, dass das Programmmodul ein Bestandteil der statischen Inhalte ist.

Eine Weiterbildung der Erfindung zeichnet sich dadurch aus, dass das Programmmodul ein Bestandteil der dynamischen Inhalte ist.

Eine besonders bevorzugte Ausführungsform der Erfindung sieht vor, dass das Programmmodul entweder Bestandteil der dynamischen Inhalte oder der statischen Inhalte ist.

Zudem wird eine Vorrichtung zum Erzeugen eines intelligenten Dokuments geschaffen, das ein Programm umfasst, das bei Vorliegen einer Voraussetzung mittels einer Programmausführungsumgebung ausführbar ist, und das mittels eines Darstellungsprogramms darstellbare Inhalte enthält. Die Vorrichtung ist dazu eingerichtet, ein Programmmodul in das intelligente Dokument einzubringen, das dazu ausgebildet ist, eine darstellbare Angabe eines Ergebnisses des Prüfungsschritts zur Prüfung des Vorliegens der Voraussetzung innerhalb des intelligenten Dokuments zu erzeugen.

Das Verfahrens, das Computerprogrammprodukt und die Vorrichtung sehen vor, dass in dem intelligenten Dokument selbst ein Programmmodul enthalten ist, mit dem eine Angabe des Ergebnisses eines Prüfungsschritts erzeugt werden kann. Hierdurch ist das intelligente Dokument selbst zur Angabe des Ergebnisses eines Prüfungsschritts in der Lage, so dass das Ergebnis des Prüfungsschritts unabhängig von der Konfiguration des Darstellungsprogramms angezeigt wird.

Unter einer darstellbaren Angabe innerhalb eines intelligenten Dokuments wird im Rahmen der Erfindung eine Angabe verstanden, die mittels des Darstellungsprogramms beispielsweise an einem Bildschirm angezeigt werden kann. Intelligente Dokumente können neben den darstellbaren Inhalten weitere Inhalte, wie beispielsweise Programmcodes enthalten, die zumindest in einem normalen Darstellungsmodus nicht mittels eines Darstellungsprogramms angezeigt werden.

Das erfindungsgemäße Verfahren zum Erzeugen eines intelligenten Dokuments, das ein Programm umfasst, das bei Vorliegen einer Voraussetzung mittels einer Programmausführungsumgebung ausführbar ist, das mittels eines Darstellungsprogramms darstellbare Inhalte enthält, kann auf verschiedene Weise fortgebildet werden.

Das Verfahrens und die Vorrichtung sehen vor, dass die statischen Inhalte von einem Server über ein Netzwerk an einen Client übermittelt werden.

Das Verfahrens und die Vorrichtung sehen vor, dass die dynamischen Inhalte von dem Server über ein Netzwerk an den Client übermittelt werden.

Hierdurch ist eine besonders rasche Dokumentenerzeugung möglich.

Eine unabhängig von einer Übermittlung oder Nichtübermittlung der statischen Inhalte erfolgende Übermittlung der dynamischen Inhalte hat den Vorteil, dass der Datenübertragungsaufwand für die Erzeugung eines intelligenten Dokuments verringert wird.

Dieser Vorteil ist noch ausgeprägter, falls mehrere intelligente Dokumente erzeugt werden.

Bei einer Erzeugung mehrerer intelligenter Dokumente ist es vorteilhaft, einmal die statischen Inhalte zu übertragen und diese mit verschiedenen dynamischen Inhalten zu verschiedenen intelligenten Dokumenten zu kombinieren.

So ist es möglich, mit einmal erzeugten statischen Inhalten mehrere voneinander verschiedene intelligente Dokumente zu erzeugen.

Das Verfahren, das Computerprogrammprodukts und die Vorrichtung sehen vor, dass die statischen Inhalte und die dynamischen Inhalte getrennt voneinander übertragen werden.

Eine Weiterbildung des Verfahrens, des Computerprogrammprodukts und der Vorrichtung sieht vor, dass die Übertragung zeitlich getrennt erfolgt.

Eine Weiterbildung des Verfahrens, des Computerprogrammprodukts und der Vorrichtung sieht vor, dass die statischen Inhalte von einer anderen Datenquelle bereitgestellt werden als die dynamischen Inhalte.

Eine Weiterbildung des Verfahrens, des Computerprogrammprodukts und der Vorrichtung sieht vor, dass die statischen Daten in einem Bereich eines Clients gespeichert werden.

Dies hat den Vorteil, dass die statischen Daten auf eine besonders einfache und vorteilhafte Weise für eine Erzeugung mehrerer - vorzugsweise verschiedener - intelligenter Dokumente bereitstehen.

Eine Nutzung der Dokumente erfolgt insbesondere durch einen Client. Der Client steht vorteilhafterweise einem Benutzer des Systems zur Verfügung und wird deshalb in der vorliegenden Anmeldung auch als Nutzerclient bezeichnet.

Der Client ist vorzugsweise so ausgestattet, dass er erkennt, ob er sich bei dem übermittelten Dokument um ein intelligentes Dokument handelt. Dies geschieht bei einer Weiterbildung der Erfindung dadurch, dass ein Vorhandensein einer Bestätigungsinformation überprüft wird. Bei der Bestätigungsinformation handelt es sich beispielsweise um eine Signatur.

Eine Ausführungsform des Verfahrens, des Computerprogrammprodukts und der Vorrichtung sieht vor, dass der Client bei dem Öffnen eines Dokuments prüft, ob es signiert wurde.

In einer Weiterbildung der Erfindung wird - vorzugsweise durch einen weiteren Prüfungsschritt - überprüft, ob die Signatur, mit der das Dokument signiert wurde, gültig ist.

Die statischen Inhalte werden vorzugsweise getrennt von den dynamischen Inhalten übertragen. Die statischen Inhalte sind beispielsweise Layoutinformationen zur Gestaltung des Dokuments.

Weiterbildungen der Erfindung sehen vor, die statischen Inhalte teilweise, überwiegend oder vollständig anders zu bearbeiten als die dynamischen Inhalte.

Beispielsweise unterscheiden sich die statischen Inhalte von den dynamischen Inhalten durch den Zeitpunkt der jeweiligen Erzeugung.

Ferner können sich die statischen Inhalte und die dynamischen Inhalte auch durch das sie jeweils auslösende Ereignis voneinander unterscheiden.

Eine Weiterbildung des Verfahrens, des Computerprogrammprodukts und der Vorrichtung sieht vor, dass die statischen Inhalte bei Vorliegen eines ersten Ereignisses übermittelt werden.

Eine Ausgestaltung des Verfahrens, des Computerprogrammprodukts und der Vorrichtung zeichnet sich dadurch aus, dass die statischen Informationen bei Vorliegen eines Ereignisses einer ersten Ereignisart übermittelt werden.

Eine Weiterbildung des Verfahrens, des Computerprogrammprodukts und der Vorrichtung sieht vor, dass die dynamischen Inhalte bei Vorliegen eines zweiten Ereignisses übermittelt werden.

Eine Ausgestaltung des Verfahrens, des Computerprogrammprodukts und der Vorrichtung zeichnet sich dadurch aus, dass die dynamischen Informationen bei Vorliegen eines Ereignisses einer zweiten Ereignisart übermittelt werden.

Eine Weiterbildung des Verfahrens, des Computerprogrammprodukts und der Vorrichtung sieht vor, dass ein Vorliegen des zweiten Ereignisses unter Berücksichtigung eines Prüfungsschritts ermittelt wird.

Eine Ausgestaltung des Verfahrens, des Computerprogrammprodukts und der Vorrichtung zeichnet sich dadurch aus, dass sich das erste Ereignis von dem zweiten Ereignis unterscheidet.

Eine Weiterbildung des Verfahrens, des Computerprogrammprodukts und der Vorrichtung sieht vor, dass sich die erste Ereignisart von der zweiten Ereignisart unterscheidet.

Ferner wird ein intelligentes Dokument geschaffen, das ein Programm umfasst, das bei Vorliegen einer Voraussetzung mittels einer Programmausführungsumgebung ausführbar ist, und das mittels eines Darstellungsprogramms darstellbare Inhalte enthält. Das intelligente Dokument zeichnet sich dadurch aus, dass ein Programmmodul enthalten ist, das dazu ausgebildet ist, eine darstellbare Angabe eines Ergebnisses des Prüfungsschritts zur Prüfung des Vorliegens der Voraussetzung innerhalb des intelligenten Dokuments zu erzeugen.

Zudem wird eine Vorrichtung zum Erzeugen eines intelligenten Dokuments geschaffen, das ein Programm umfasst, das bei Vorliegen einer Voraussetzung mittels einer Programmausführungsumgebung ausführbar ist, und das mittels eines Darstellungsprogramms darstellbare Inhalte enthält. Die Vorrichtung ist dazu eingerichtet, ein Programmmodul in das intelligente Dokument einzubringen, das dazu ausgebildet ist, eine darstellbare Angabe eines Ergebnisses des Prüfungsschritts zur Prüfung des Vorliegens der Voraussetzung innerhalb des intelligenten Dokuments zu erzeugen.

Eine Weiterentwicklung der Erfindung der Erfindung besteht darin, dass in dem intelligenten Dokument selbst ein Programmmodul enthalten ist, mit dem eine Angabe des Ergebnisses eines Prüfungsschritts erzeugt werden kann. Hierdurch ist das intelligente Dokument selbst zur Angabe des Ergebnisses eines Prüfungsschritts in der Lage, so dass das Ergebnis des Prüfungsschritts unabhängig von der Konfiguration des Darstellungsprogramms angezeigt wird.

Unter einer darstellbaren Angabe innerhalb eines intelligenten Dokuments wird im Rahmen der Erfindung eine Angabe verstanden, die mittels des Darstellungsprogramms beispielsweise an einem Bildschirm angezeigt werden kann. Intelligente Dokumente können neben den darstellbaren Inhalten weitere Inhalte, wie beispielsweise Programmcode enthalten, die zumindest in einem normalen Darstellungsmodus nicht mittels Darstellungsprogramms angezeigt werden.

Innerhalb der Prüfungsschritte wird vorteilhaft überprüft werden, ob bestimmte Voraussetzungen für die Nutzung der Funktionalität des intelligenten Dokuments vorliegen. Sind diese Voraussetzungen erfüllt, wird ein positives Ergebnis des Prüfungsschritts angezeigt. Falls die Voraussetzungen nicht erfüllt sind, wird ein negatives Prüfungsergebnis angezeigt, so dass der Nutzer Kenntnis darüber erhält, welche Voraussetzung nicht erfüllt ist. Diese Kenntnis kann er dazu nutzen, die entsprechende Voraussetzung zu schaffen.

In einer Ausführungsform des Verfahrens, des intelligenten Dokuments und der Vorrichtung ist es vorgesehen, dass der Prüfungsschritt mittels des Programmmoduls durchgeführt wird.

Vorteilhaft ist das Programmmodul in dieser Ausgestaltung auch zur Durchführung des Prüfungsschritts ausgebildet, so dass sich das intelligente Dokument unabhängig von der speziellen Konfiguration des Darstellungsprogramms selbst prüfen kann.

Das Verfahren und die Vorrichtung zeichnen sich dadurch aus, dass in dem Prüfungsschritt überprüft wird, ob die Programmausführungsumgebung zur Verfügung steht.

Dies hat den Vorteil, dass geprüft wird, ob die Programmausführungsumgebung zur Verfügung steht, so dass der Nutzer gegebenenfalls darüber informiert werden kann, dass die Programmausführungsumgebung nicht vorhanden ist und daher bestimmte Funktionen des intelligenten Dokuments nicht verfügbar sind.

Falls die Programmausführungsumgebung nicht zur Verfügung steht, kann der Prüfungsschritt jedoch nicht direkt durch die Ausführung eines Programms vorgenommen werden. Ebenso kann die Angabe eines negativen Ergebnisses des Prüfungsschritts nicht mittels des Programmmoduls in das intelligente Dokument eingebracht werden.

Das erfindungsgemäße Verfahren beinhaltet daher, dass in das intelligente Dokument eine darstellbare Angabe eines negativen Ergebnisses des Prüfungsschritts eingebracht wird, und dass das Programmmodul dazu ausgebildet wird, die Angabe des negativen Ergebnisses des Prüfungsschritts in eine darstellbare Angabe eines positiven Ergebnisses des Prüfungsschritts umzuwandeln.

Ferner sieht eine Ausführungsform des intelligenten Dokuments vor, dass das intelligente Dokument eine darstellbare Angabe eines negativen Ergebnisses des Prüfungsschritts enthält, die mittels des Programmmoduls in eine darstellbare Angabe eines positiven Ergebnisses des Prüfungsschrittes umwandelbar ist.

Zudem ist die Vorrichtung dadurch gekennzeichnet, dass die Vorrichtung dazu ausgebildet ist, eine darstellbare Angabe eines negativen Ergebnisses des Prüfungsschritts in das intelligente Dokument einzubringen, und dass das Programmmodul dazu eingerichtet ist, die darstellbare Angabe des negativen Ergebnisses des Prüfungsschritts in eine Angabe eines positiven Ergebnisses des Prüfungsschritts umzuwandeln.

Erfindungsgemäß wird die Prüfung, ob die Programmausführungsumgebung vorhanden ist, implizit mittels des Programmmoduls vorgenommen, das die Angabe des Ergebnisses des Prüfungsschritts innerhalb des intelligenten Dokuments erzeugt. Dies wird dadurch erreicht, dass aufgrund der Ausführung des Programmmoduls, die nur bei verfügbarer Programmausführungsumgebung erfolgen kann, eine Angabe eines positiven Ergebnisses des Prüfungsschritts durch eine Umwandlung einer bereits in dem intelligenten Dokument vorhandenen Angabe eines negativen Ergebnisses des Prüfungsschritts erzeugt wird. Falls die Programmausführungsumgebung nicht verfügbar ist, kann das Programmmodul nicht ausgeführt werden, und die Angabe des negativen Ergebnisses des Prüfungsschritts bleibt erhalten.

Bei einer Weiterbildung des Verfahrens, des intelligenten Dokuments und der Vorrichtung ist es vorgesehen, dass das Programm den einmaligen Druck eines Frankiervermerks steuert und dass das intelligente Dokument von einem Server über ein Netzwerk an einen Client übermittelt wird.

Das Verfahren und die Vorrichtung zeichnen sich weiterhin dadurch aus, dass bei einem ersten Druck des Frankiervermerks eine Nachricht von dem Client an den Server übermittelt wird und dass der Druck aufgrund der Nachricht in dem Server protokolliert wird.

Ferner ist es bei einer Ausgestaltung des Verfahrens, des intelligenten Dokuments und der Vorrichtung vorgesehen, dass das Programm zur Steuerung des Drucks des Frankiervermerks nur dann ausführbar ist, wenn eine Netzwerkverbindung zwischen dem Client und dem Server besteht und wenn anhand einer Abfrage des Servers festgestellt wird, dass der Frankiervermerk noch nicht gedruckt worden ist.

Hierdurch wird verhindert, dass ein einmal bezahlter Frankiervermerk mehrfach ausgedruckt wird.

Eine Ausgestaltung des Verfahrens und der Vorrichtung ist dadurch gekennzeichnet, dass in dem Prüfungsschritt überprüft wird, ob ein Zugriff auf das Netzwerk besteht.

Zudem beinhaltet eine Weiterbildung des Verfahrens und der Vorrichtung, dass in dem Prüfungsschritt eine Abfrage des Servers vorgenommen wird, bei der überprüft wird, ob Inhalte des intelligenten Dokuments bereits einmal gedruckt worden sind.

Das Verfahren und die Vorrichtung beinhalten, dass die Programmausführungsumgebung Bestandteil des Darstellungsprogramms ist.

Darüber hinaus wird ein Computerprogrammprodukt bereitgestellt, das ein Computerprogramm zur Ausführung eines Verfahrens der zuvor beschriebenen Art enthält.

Diese und weitere Vorteile, Besonderheiten und zweckmäßige Weiterbildungen der Erfindung werden auch anhand der Ausführungsbeispiele deutlich, die im Folgenden unter Bezugnahme auf die Figuren beschrieben werden.

### Kurze Beschreibung der Figuren

Von den Figuren zeigt:
- Fig. 1: eine schematische Darstellung eines Clients, der mit einem Server verbunden ist, von dem intelligente Dokumente an den Client übermittelbar sind,
- Fig. 2a: eine beispielhafte Veranschaulichung von darstellbaren Inhalten eines intelligenten Dokuments mit Angaben von negativen Ergebnissen mehrerer Prüfungsschritte,
- Fig. 2b: eine beispielhafte Veranschaulichung von darstellbaren Inhalten eines intelligenten Dokuments mit Angaben von positiven Ergebnissen mehrerer Prüfungsschritte,
- Fig. 3: eine schematische Darstellung einer Integration einer Dokumentenerzeugung in ein erfindungsgemäßes System,
- Fig. 4a: ein erstes Teillabel eines erfindungsgemäß erzeugten Labels,
- Fig. 4b: ein zweites Teillabel eines erfindungsgemäß erzeugten Labels und
- Fig. 5: ein weiteres erfindungsgemäßes Label.

### Darstellung der Erfindung anhand der Figuren

Nachfolgend werden bevorzugte Ausführungsformen der Erfindung anhand der Abbildungen erläutert.

Ein Einsatz der Erfindung in Systemen zum Erzeugen von Labeln oder anderen Aufdrucken zum Versehen von Postsendungen oder anderen zu transportierenden Gütern ist besonders vorteilhaft.

In diesem Fall ist es besonders vorteilhaft das Adressdaten und/oder frankierrelevante Daten dynamische Inhalte im Sinne der Erfindung darstellen.

Die Erfindung eignet sich jedoch auch für einen Einsatz anderer dynamischer Informationen und in anderen technischen Zusammenhängen, beispielsweise für eine Automatisierung von sonstigen Logistikvorgängen, von Produktionsvorgängen sowie von der Erzeugung und Verarbeitung von Informationen. Besonders vorteilhaft sind Einsatzgebiete, bei denen dynamische Informationen in einem statischen Rahmen wiedergegeben und/oder bearbeitet werden.

Der Client erkennt, dass es sich bei einem übermittelten Dokument um ein intelligentes Dokument handelt, indem er das Vorhandensein und/oder die Gültigkeit einer Signatur, mit der das Dokument versehen ist, prüft.

Bei der Gültigkeitsprüfung der Signatur wird zweckmäßigerweise überprüft, dass sie nicht manipuliert wurde.

Erst nach einer erfolgreichen Gültigkeitsprüfung wird der - beispielsweise als "Java-Script" - enthaltene Programmcode aktiviert.

Die statischen Inhalte werden beispielsweise als Layoutinformationen übertragen.

Bei den statischen Informationen handelt es sich um Angaben, die insbesondere ein Einbetten von Daten ermöglichen.

Bei den Rahmen kann es sich beispielsweise auch um so genannte Frames handeln.

Ein Frame ist ein Teilbereich einer graphischen Darstellung, insbesondere einer Bildschirmseite, beispielsweise einer grafischen Benutzeroberfläche. Ein einzelnes Segment wird dabei als Frame (engl. Rahmen) bezeichnet, die Definition aller Frames als Frameset.

Der Einsatz von Frames ermöglicht die parallele Darstellung von mehreren Einzeldokumenten, die sich gegebenenfalls unabhängig voneinander verschieben lassen. Über die Frames lassen sich Inhalte aus unterschiedlichen Quellen bzw. aus verschiedenen Datenquellen miteinander kombinieren.

Ferner können statische Inhalte in Form von Inlineframes (iframes) eingesetzt werden. Sie erlauben eine besonders einfache Dateneinbindung in eine dargestellte Bildschirmseite.

Die statischen Daten werden mit dynamischen Daten verbunden.

Erfindungsgemäß sind verschiedene Lösungen für die Übernahme von dynamischen Inhalten vorgesehen.

So ist es beispielsweise möglich, dynamische Inhalte unmittelbar vor einer Bildschirmdarstellung und /oder vor einem Druckvorgang zu übermitteln.

Dies kann beispielsweise auf eine der folgenden Arten geschehen:
- Per Textdatei (csv),
- durch Direktübertragung aus einer Datenbank oder
- über SOAP-Calls

Bei einer Übertragung der dynamischen Inhalte durch SOAP-Calls ist es vorteilhaft, HTTPS als Übertragungsprotokoll, XML als Daten-Format und SOAP als Steuerungslogik zu verwenden.

Obwohl es grundsätzlich möglich ist, Binärdaten zu übertragen, sind Varianten, bei denen die Binärdaten von dem Client auf Grundlage von zuvor in einem anderen Format übermittelten Daten generiert werden, bevorzugt.

Hierdurch können die Inhalte über Plattform- und Betriebssystemgrenzen hinweg ausgetauscht werden.

Außerdem wird so die Archivierung von Datenbeständen erleichtert.

Durch die im Client erfolgende Umwandlung in das Binärformat können die Vorteile dieses Formates gleichfalls genutzt werden.

Die in das Binärformat umgewandelten Informationen (Daten) lassen sich schnell laden, lesen und speichern und benötigen weniger Speicherplatz auf Massenspeichern. Außerdem lassen sich darin verschiedene Objekttypen (beispielsweise Text mit Bildern) relativ einfach ablegen.

Eine Ausführungsform, bei der keine Binärdaten übertragen werden, sondern nach der Übertragung von in einem anderen Format übertragenen Daten erzeugt werden, sieht die Generierung von Barcodes oder Matrixcodes im Client vor, beispielsweise als PDF-Dokument.

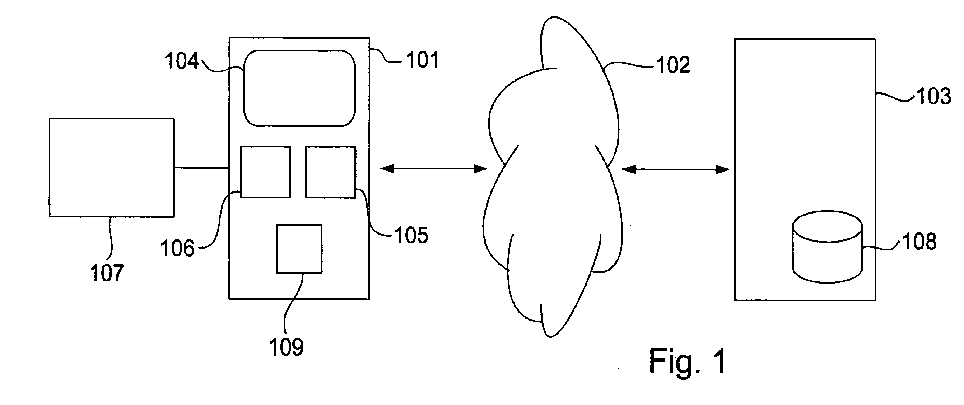

In Figur 1 ist schematisch ein Client 101 dargestellt, der über ein Netzwerk 102 mit einem Server 103 verbunden ist. Bei dem Netzwerk 102 handelt es sich beispielsweise um das Internet oder ein Intranet. Bei dem Client 101 handelt es sich beispielsweise um einen PC (Personal Computer).

Der Einsatz eines Personalcomputers ist lediglich beispielhaft zu verstehen. Hiermit ist jede Datenverarbeitungseinheit gemeint, die Bearbeitungsvorgänge ausführen kann. Insbesondere sind hierbei Systeme inbegriffen, die mit voneinander verschiedenen Betriebssystemen arbeiten können. Beispielsweise ist es möglich, Windows, Mac oder Linux-Betriebssysteme einzusetzen.

Insbesondere handelt es sich bei dem Client (Nutzerclient) um einen Computer, der über das Internet angeschlossen ist. Die Verbindung mit dem Server erfolgt zur Erhöhung der Datensicherheit insbesondere via https "hyper text transfer Protocol" mit verschlüsselter Übertragung. Dies erschwert "Man in the Middle" Attacken.

Es ist vorteilhaft, SOAP-Calls zusätzlich noch mit einer eigenen Signatur zu versehen und Informationen nur dann zu verarbeiten, wenn die jeweils angebrachte Signatur als gültig erkannt wurde.

Bei den Informationen handelt es sich beispielsweise um Daten die mit der XML "Extended Markup Language" erstellt werden.

Es ist vorteilhaft, einen Datenaustausch entsprechend SOAP "Simple Object Access Protocol" durchzuführen.

In einer bevorzugten Ausführungsform werden die Daten auf den Client per Download übertragen.

Auf dem Client ist beispielsweise ein Adobe-Reader, Version 6.0.2, eine jüngere Version dieses Programms oder Adobe Professional Software installiert. Inhalte werden über PDFs, per Adobe-Reader geöffnet und anschließend werden die dynamische Inhalte (insbesondere anwenderspezifische Daten) per Soap-Call in den Hauptspeicher der Anwendung Adobe-Reader geladen und dann zusammen mit den statischen Daten durch einen Druckauftrag an einen Drucker geschickt.

Zweckmäßigerweise ist der Client so ausgestattet, dass er über eine Anzeigeeinrichtung 104 und wenigstens eine Eingabeeinrichtung 109 sowie über einen Speicher 105 und einen Prozessor 106 verfügt. In dem Speicher 105 ist insbesondere ein Darstellungsprogramm gespeichert, das in dem Client 101 ausführbar ist und dazu in der Lage ist, herkömmliche Dokumente eines bestimmten Formats, wie beispielsweise PDF-Dokumente zu öffnen und deren Inhalt an der Anzeigeeinrichtung 104 darzustellen. Ferner erlaubt das Darstellungsprogramm die Verarbeitung von intelligenten Dokumenten, d.h., es ist dazu ausgebildet, darstellbare Inhalte von intelligenten Dokumenten an der Anzeigeeinrichtung 104 darzustellen und Programme auszuführen, die in dem intelligenten Dokument enthalten sind. Hierfür stellt das Darstellungsprogramm eine Programmausführungsumgebung bereit, mit der in den Programmen enthaltene Programmbefehle interpretiert und ausgeführt werden können. Darüber hinaus ist der Client 101 über eine Schnittstelle mit einer Druckeinrichtung 107 verbunden und verfügt über eine Netzwerkschnittstelle zur Verbindung mit dem Netzwerk 102.

Intelligente Dokumente werden von dem Server 103 über das Netzwerk 102 an den Client 103 übermittelt. Hierzu verfügt der Server 103 über eine beispielsweise als Softwareprogramm ausgebildete Einrichtung zur Erzeugung intelligenter Dokumente. Der Server 103 ist als Server ausgebildet, der intelligente Dokumente für den Druck von Frankiervermerken bereitstellt und umfasst der Server 103 eine Datenbank 108 mit je einem Eintrag für jeden erzeugten und an einen Client 101 übermittelten Frankiervermerk.

Die intelligenten Dokumente umfassen Inhalte, die mittels des Darstellungsprogramms an der Anzeigeeinrichtung 104 dargestellt werden können und aus Text- und/oder Grafikelementen bestehen. Ferner sind in die intelligenten Dokumente Programme eingebettet, die mittels der Programmausführungsumgebung des Darstellungsprogramms ausführbar sind. Bei den Programmen handelt es sich um Skripte, die den Programmcode umfassen, der von der Programmausführungsumgebung interpretiert werden kann. Anhand der Programme können darstellbare Inhalte der intelligenten Dokumente verändert werden. Ferner ermöglichen die Programme die Ausführung weiterer Prozesse, wie beispielsweise die Ansteuerung der Druckeinrichtung 102 für den Druck von Inhalten des intelligenten Dokuments oder Zugriffe auf die Netzwerkschnittstelle. Der Programmcode wird in dem normalen Darstellungsmodus des Darstellungsprogramms nicht an der Anzeigeeinrichtung 104 dargestellt. Grundsätzlich kann jedoch das Darstellungsprogramm über einen Sonderdarstellungsmodus verfügen, in dem auch der Programmcode darstellbar ist.

Ein von dem Server bereitgestelltes intelligentes Dokument enthält im Rahmen der vorliegenden Erfindung ferner eine Statusinformation zur Angabe des Ergebnisses eines oder mehrerer Prüfungsschritte. Darstellbare Angaben der Prüfungsergebnisse werden dabei mittels eines oder mehrerer Programmmodule erzeugt, die ebenfalls in dem intelligenten Dokument enthalten sind. Die Programmmodule können als eigenständige Programme ausgebildet oder Teil eines Programms sein, das zur Ausführung der Hauptfunktionalität des intelligenten Dokuments vorgesehen ist. Innerhalb der Prüfungsschritte schritte wird ermittelt, ob bestimmte Voraussetzungen für die Nutzung der Hauptfunktionalitäten des intelligenten Dokuments vorliegen. Hierdurch erlangt der Nutzer im Falle einer nicht nutzbaren Funktionalität insbesondere Kenntnis einer möglicherweise nicht erfüllten Voraussetzung. Diese Kenntnis kann er verwenden, um die Voraussetzung zu schaffen und so die Funktionalitäten des intelligenten Dokuments zu nutzen.

Eine Voraussetzung für die Nutzung der Funktionalität eines intelligenten Dokuments ist die Verfügbarkeit der Programmausführungsumgebung. In der Regel enthalten jedoch nicht alle Darstellungsprogramme zur Darstellung von Dokumenten im Format des intelligenten Dokuments eine geeignete Programmausführungsumgebung. So kann die Programmausführungsumgebung beispielsweise in älteren Versionen des Darstellungsprogramms nicht vorhanden sein. Es wird daher in einem Prüfungsschritt insbesondere geprüft, ob das Darstellungsprogramm des Clients 101 über eine Programmausführungsumgebung verfügt, die zur Ausführung des in dem intelligenten Dokument enthaltenen Programms geeignet ist. Um das Ergebnis dieses Prüfungsschritts auch dann korrekt darstellen zu können, wenn die Programmausführungsumgebung nicht vorhanden ist, wird bereits bei der Erstellung des intelligenten Dokuments eine darstellbare Angabe eines negativen Ergebnisses des Prüfungsschritts in das Dokument eingebracht. Ferner wird in das intelligente Dokument ein Programmmodul eingebracht, das die Angabe des negativen Ergebnisses des Prüfungsschritts in die Angabe einer erfolgreichen Durchführung des Prüfungsschritts umwandelt, wenn es ausgeführt wird. Das intelligente Dokument wird dabei so konfiguriert, dass das Programmmodul nach dem Öffnen des intelligenten Dokuments in dem Darstellungsprogramm bei vorhandener Programmausführungsumgebung automatisch gestartet wird.

Die Prüfung, ob die Programmausführungsumgebung zur Verfügung steht, wird implizit durchgeführt und liefert ein positives oder negatives Ergebnis, je nachdem ob das Programmmodul ausgeführt werden kann oder nicht.

Neben diesem Prüfungsschritt, in dem eine Entscheidung über das Vorhandensein der Programmausführungsumgebung getroffen wird, können gleichfalls andere Prüfungsschritte mittels eines in dem intelligenten Dokument enthaltenen Programms ausgeführt werden. Die Ergebnisse dieser Prüfungsschritte können dann in der gleichen Weise dargestellt werden, indem mittels eines Programmmoduls eine Umwandlung der Angabe eines negativen Ergebnisses in die Angabe eines positiven Ergebnisses vorgenommen wird.

Die Umwandlung der Angabe des negativen Ergebnisses des Prüfungsschritts in die Darstellung eines positiven Ergebnisses des Prüfungsschritts kann durch eine Veränderung der Angabe erfolgen. Beispielsweise können der negativen Angabe eine oder mehrere Zeichen hinzugefügt werden, um eine Angabe eines positiven Ergebnisses des Prüfungsschritts zu erzeugen. Ferner kann die Statusangabe beispielsweise farbig ausgebildet sein. Die Umwandlung der Angabe des negativen Ergebnisses des Prüfungsschritts in eine Angabe eines positiven Ergebnisses kann hierbei durch eine Farbänderung erfolgen, die mittels des Programms vorgenommen wird. Darüber hinaus kann es auch vorgesehen sein, dass Zeichen oder Symbole der Angabe des negativen Ergebnisses des Prüfungsergebnisses zumindest teilweise durch Zeichen oder Symbole ersetzt werden, mittels derer ein positives Ergebnis des Prüfungsschritts dargestellt wird. Die Darstellung der Prüfergebnisse kann hierbei für den Nutzer sichtbar oder unsichtbar erfolgen.

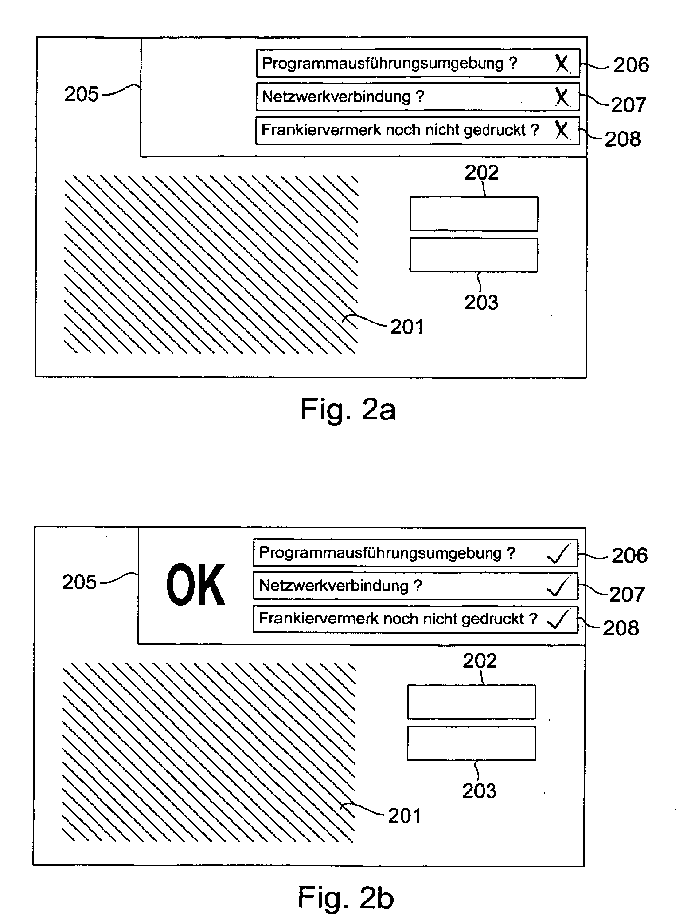

In Figur 2a ist beispielhaft eine Darstellung von Inhalten eines intelligenten Dokuments an der Anzeigeeinrichtung 104 eines Clients 101 gezeigt. Das intelligente Dokument erlaubt den einmaligen Druck eines Frankiervermerks, der kryptographisch gesicherte Daten enthalten kann, welche die Prüfung seiner Authentizität erlauben. Das intelligente Dokument umfasst einen Hauptbereich 201, um den beispielsweise ein Muster des Frankiervermerks bzw. eines den Frankiervermerk enthaltenden Frankierlabels dargestellt werden kann. Das Muster kann beliebig oft ausgedruckt werden. Hierfür stellt das intelligente Dokument eine Schaltfläche 202 bereit, die an ein in dem intelligenten Dokument enthaltenes Programm zur Steuerung des Musterdrucks angebunden ist. Ferner enthält das intelligente Dokument eine weitere Schaltfläche 203, deren Betätigung den Druck des gültigen Frankiervermerks auslöst. An die Schaltfläche 203 ist ein Programm angebunden, das den Druck des gültigen Frankiervermerks steuert und bei Betätigung der Schaltfläche ausgeführt wird. Die Schaltflächen 202, 203 können von dem Bediener des Clients 101 mittels der Eingabeeinrichtung 109 betätigt werden.

Vorzugsweise wird hierbei automatisch der an der jeweiligen Arbeitseinheit des Nutzers verfügbare Drucker vorgegeben, d.h. es kommt zur Ausführung eines Programmmoduls, das innerhalb des Dokuments den Druck steuert. Der Nutzer ist bei dieser Weiterbildung der Erfindung nicht in der Lage, die von der Programmausführungsumgebung zur Verfügung gestellte Druckauswahloption zu nutzen. Hierdurch wird ein Missbrauchsrisiko weiter reduziert.

Der Druck des gültigen Frankiervermerks wird protokolliert, wobei die Steuerung der Protokollierung durch ein Programm des intelligenten Dokuments gesteuert bzw. ausgelöst wird. Bei Betätigung der Schaltfläche 203 wird hierzu von dem Programm die Übermittlung einer Nachricht über den Druck an den Server 103 ausgelöst, in dessen Datenbank 108 nach Erhalt der Nachricht ein entsprechender Vermerk über den Druck in dem Datensatz ergänzt wird, der dem Frankiervermerk zugeordnet ist. Vorzugsweise ist dem Frankiervermerk ein eindeutiger Identifizierungscode zugeordnet, der insbesondere zur Identifizierung des Datenbankeintrags dient und auch in der Nachricht enthalten ist. Um den mehrfachen Druck des Frankiervermerks zu verhindern, wird vor Aktivierung der Schaltfläche 203 anhand einer Abfrage der Datenbank des Servers ermittelt, ob der Vermerk über den Druck vorhanden ist. Ferner ist der Frankiervermerk an der Anzeigeeinrichtung 104 nicht darstellbar, um zu verhindern, dass Kopien der Darstellung erzeugt und zur Frankierung von Postsendungen verwendet werden. Dies wird in einer Ausführungsform dadurch erreicht, dass der Frankiervermerk in einem versteckten Bereich des intelligenten Dokuments enthalten ist, der von dem Darstellungsprogramm nicht darstellbar ist. In einer weiteren Ausführungsform ist es vorgesehen, dass der gültige Frankiervermerk erst bei Betätigung der Schaltfläche 203 für den Portodruck von dem Server 103 abgerufen wird.

In einer besonders gegen Manipulationsmöglichkeiten geschützten Weiterbildung der Erfindung wird das Verfahren so durchgeführt beziehungsweise die Vorrichtung so ausgestaltet, dass ein Drucken eines Frankiervermerks nur dann möglich ist, falls
- das Darstellungsprogramm über eine Programmausführungsumgebung zur Ausführung von in das intelligente Dokument eingebetteten Programmen verfügt,
- eine Anbindung des Clients 101 an das Netzwerk 102 besteht, auf welche die Programme zugreifen können und
- die Datenbank keinen Vermerk über den Druck des Frankiervermerks enthält.

Daher werden vorzugsweise beim Öffnen des intelligenten Dokuments Prüfungsschritte durchgeführt, in denen geprüft wird, ob die zuvor genannten Voraussetzungen erfüllt sind. Die Ergebnisse dieser Prüfungsschritte werden in dem intelligenten Dokument in einer Statusanzeige 205 dargestellt. Die dargestellte Statusanzeige enthält ein Statusfeld 206 für die Angabe des Ergebnisses der Prüfung, ob die Programmausführungsumgebung zur Verfügung steht, ein Statusfeld 207 für die Angabe des Ergebnisses der Prüfung, ob eine Netzwerkanbindung besteht sowie ein Statusfeld für die Angabe des Ergebnisses der Prüfung, ob der Frankiervermerk bereits einmal gedruckt worden ist. Das von dem Server 103 bereitgestellte intelligente Dokument enthält dabei zunächst die in Figur 2a schematisch dargestellte Statusanzeige, die zumindest die Angabe eines negativen Ergebnisses des ersten Prüfungsschritts umfasst, bei dem das Vorhandensein der Programmausführungsumgebung überprüft wird. Die Ergebnisse der übrigen Prüfungsschritte, bei denen die Anbindung des Clients 101 an das Netzwerk 101 und das Vorhandensein des Vermerks über den Druck in der Datenbank des Servers 103 überprüft werden, sind vorzugsweise ebenfalls negativ dargestellt. Grundsätzlich ist es bei diesen Angaben auch möglich, sie in neutraler Form in das Dokument einzubringen und nach Durchführung der Prüfungsschritte je nach Erfolg in Angaben eines positiven oder negativen Prüfergebnisses umzuwandeln. Dass zunächst eine Angabe negativer Prüfergebnisse in dem Dokument vorhanden ist, hat jedoch insbesondere den Vorteil, dass die Statusangaben für diese Prüfschritte sich in gleicher Weise verhalten wie die Angabe des Ergebnisses der Prüfung, ob die Programmausführungsumgebung vorhanden ist. Dieses Prüfergebnis kann nicht in neutraler Form in das Dokument eingebracht und nach erfolgreicher Prüfung umgewandelt werden, da die fehlende Programmausführungsumgebung eine Umwandlung bei einem Misserfolg der Prüfung nicht zulassen würde. Das negative Ergebnis eines Prüfungsschritts wird bei der Statusanzeige, die in Figur 2a gezeigt ist, durch ein Kreuz innerhalb der Statusfelder 206, 207, 208 dargestellt.

Nach dem Öffnen des intelligenten Dokuments in dem Darstellungsprogramm des Clients 101 werden die Prüfungsschritte sukzessive durchgeführt. Bei erfolgreicher Durchführung der Prüfungsschritte werden die entsprechenden Angaben des negativen Prüfergebnisses in der Statusanzeige in eine Angabe positiver Prüfergebnisse umgewandelt. Ferner wird nach erfolgreicher Durchführung eines Prüfungsschritts der nachfolgende Prüfungsschritt gestartet. Insbesondere enthält das intelligente Dokument dabei ein Programmmodul, das die in dem Statusfeld 206 enthaltene Angabe des negativen Ergebnisses der Prüfung, ob die Programmausführungsumgebung vorhanden ist, wie zuvor bereits beschrieben, in ein positives Prüfergebnis umwandelt. Nachfolgend wird mittels desselben oder eines weiteren Programmmoduls festgestellt, ob ein Zugriff auf das Netzwerk 102 besteht, indem beispielsweise eine Anfrage an den Server 103 gesendet wird. Wird auf diese Anfrage eine Antwort erhalten, besteht die Netzwerkanbindung, und die entsprechende Angabe in dem Statusfeld 207 wird in die Angabe eines positiven Ergebnisses des Prüfungsschritts umgewandelt. Ferner wird mittels eines in dem intelligenten Dokument vorhandenen Programmmoduls über das Netzwerk 102 die Datenbank 108 des Servers 103 abgefragt, um festzustellen, ob der Frankiervermerk bereits einmal ausgedruckt worden ist. Ist dies nicht der Fall, wird die entsprechende Angabe in dem Statusfeld 108 in die Angabe eines positiven Ergebnisses des Prüfungsschritts umgewandelt. Zudem wird die Schaltfläche 203 für die Initiierung des Drucks des gültigen Frankiervermerks eingeblendet bzw. derart aktiviert, dass sie von dem Nutzer betätigt werden kann.

In Figur 2b sind beispielhaft die Angaben der positiven Ergebnisse der Prüfungsschritte innerhalb der Statusanzeige 205 des bereits in Figur 2a dargestellten intelligenten Dokuments gezeigt. Dabei sind hier beispielhaft die in Figur 2a dargestellten Kreuze in den Statusfeldern 206, 207, 208 durch Haken ersetzt, um die positiven Prüfungsergebnisse anzuzeigen. Ferner ist es bei der gezeigten Ausführungsform des intelligenten Dokuments vorgesehen, dass die erfolgreiche Durchführung aller Prüfungsschritte durch die Buchstaben "OK" angezeigt wird, die gleichfalls mittels eines Programms als darstellbarer Inhalt in das intelligente Dokument eingebracht werden, wenn der letzte Prüfungsschritt erfolgreich durchgeführt worden ist. Die Darstellung kann jedoch auch - gegebenenfalls optisch - unterdrückt werden, so dass der Nutzer z.B. nur über etwaige Fehler im Prüfprozess informiert wird.

Falls ein Prüfungsschritt nicht erfolgreich durchgeführt werden konnte, werden die nachfolgenden Prüfungsschritte vorzugsweise nicht mehr durchgeführt. Anhand eines dargestellten negativen Ergebnisses eines bestimmten Prüfungsschritts erhält der Nutzer Kenntnis über eine fehlende Voraussetzung für die Frankierung einer Postsendung mittels des intelligenten Dokuments. Er erhält damit die Möglichkeit, Maßnahmen zur Schaffung der entsprechenden Voraussetzung zu ergreifen. Bei einer Angabe eines negativen Ergebnisses der Prüfung, ob die Programmausführungsumgebung verfügbar ist, kann er beispielsweise eine Version des Darstellungsprogramms auf dem Client 101 installieren, die über die Programmausführungsumgebung verfügt. Bei einer Angabe eines negativen Ergebnisses der Prüfung, ob eine Netzwerkanbindung vorhanden ist, kann der Nutzer beispielsweise die Netzwerkverbindung aktivieren. Falls ein negatives Ergebnis der Prüfung, ob der Frankiervermerk nicht bereits ausgedruckt worden ist, dargestellt wird, weiß der Nutzer, dass er den Frankiervermerk nicht noch einmal drucken kann und kann für die Frankierung der Postsendung einen neuen Frankiervermerk von dem Server 103 anfordern.

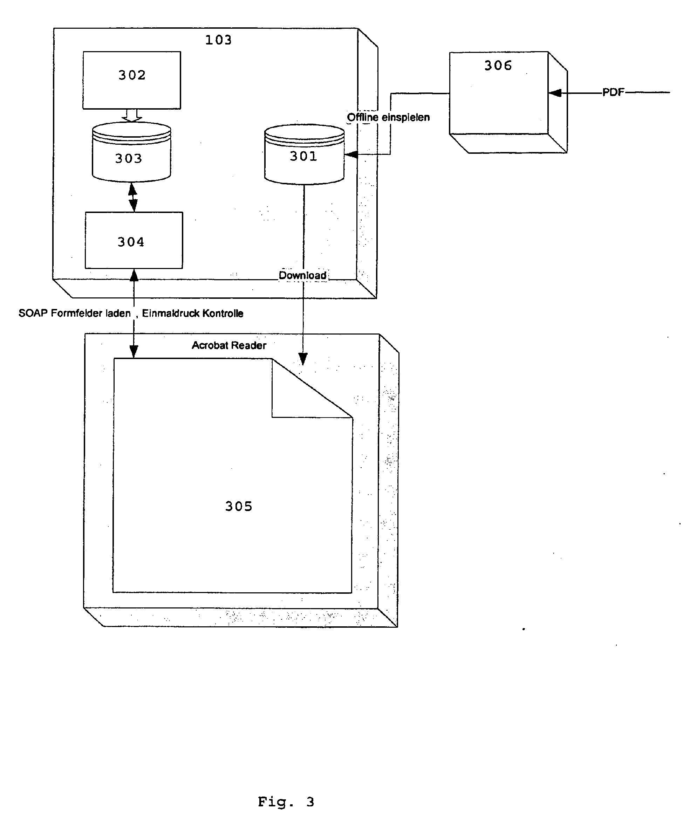

Fig. 3 zeigt eine schematische Darstellung einer Integration einer Dokumentenerzeugung in ein erfindungsgemäßes System.

Das dargestellte System beinhaltet einen Server 103, der eine Übertragung darstellbarer Inhalte ermöglicht.

Die darstellbaren Inhalte bestehen aus statischen Inhalten und dynamischen Inhalten.

In der dargestellten Ausführungsform werden die statischen Inhalte als PDF-Templates in ein zu erzeugendes Dokument eingebracht.

Dynamische Inhalte werden von einem geeigneten Server, vorzugsweise einem Web-Server 302, in einen Dokumentendatensatz 303 eingebracht. Diese dynamischen Inhalte werden ggf. durch weitere Inhalte ergänzt. Bei den weiteren Inhalten kann es sich - je nach beabsichtigtem Einsatz - um statische Inhalte oder um dynamische Inhalte handeln. Eine Hinzufügung von dynamischen Inhalten ist bevorzugt, da sich hierdurch auf eine besonders einfache und zweckmäßige Weise identifizierbare Dokumente erstellen lassen.

Dies geschieht in einer besonders bevorzugten Ausführungsform der Erfindung dadurch, dass die dynamischen Inhalte mit Lizenzierungsinformationen 304 verknüpft werden.

Eine Ausführungsform der Erfindung sieht vor, dass die Lizenzierungsinformationen 304 ein Bestandteil der statischen Inhalte sind.

Eine Weiterbildung der Erfindung zeichnet sich dadurch aus, dass die Lizenzierungsinformationen 304 ein Bestandteil der dynamischen Inhalte sind.

Eine besonders bevorzugte Ausführungsform der Erfindung sieht vor, dass die Lizenzierungsinformationen 304 entweder Bestandteil der dynamischen Inhalte oder der statischen Inhalte sind.

Nachfolgend wird die Erfindung am Beispiel der Erzeugung von Labeln erläutert. Bei den Labeln handelt es sich beispielsweise um Adresslabel und/oder Frankierlabel. Derartige Label eignen sich insbesondere als Frankiervermerke und/oder für eine Steuerung logistischer Vorgänge, beispielsweise Tracking und Tracing sowie für die Steuerung sonstiger logistischer Vorgänge, beispielsweise für die Sortierung von Postsendungen.

Zweckmäßigerweise werden die Label - insbesondere das Adresslabel und/oder das Frankierlabel so ausgestattet, dass sie maschinenlesbar sind.

Der Begriff "Postsendungen" ist in seiner weitesten Bedeutung zu verstehen. Er umfasst alle Transporte, die einen Gegenstand von einem Absendeort zu einem Zielort transportieren. Insbesondere handelt es sich um einen Transport von Briefen, Päckchen, Paketen, Transportbehältern, Paletten, Containern oder um sonstige für einen Versand von Gegenständen, geeigneten Transportbehältern.

Eine Weiterbildung der Erfindung beinhaltet ein System, das Kunden ermöglicht, Label mittels eines PC, der im Folgenden als Nutzerclient bezeichnet wird, über eine Online-Schnittstelle anzufordern und zu drucken. Die Schnittstelle wird von einem Server bereitgestellt, der im Folgenden als POP-Server (POP: Parcel Online Postage) bezeichnet wird. Die Merkmale des dargestellten POP-Servers können einzeln oder in beliebiger Kombination bei einem Web-Server eingesetzt werden. Die Darstellung des POP-Servers und seines Einsatzes schließt daher alle Ausgestaltungen von Web-Servern ein.

Zur Erzeugung der Label generiert der Kunde zunächst einen oder mehrere Einträge für zu versendende Postsendungen in einem Warenkorb auf einer ersten von dem POP-Server bereitgestellten Webseite (NOW 1). Hierzu enthält die Webseite NOW 1 einen Button, über den der Nutzer auf eine weitere Internetseite (NOW2 - Sendungs-Details) zugreifen kann, auf der Daten einer Sendung erfasst und manipuliert werden können.

Die Daten umfassen beispielsweise die Absenderadresse, die Empfängeradresse und eine Auswahl des Produkts, aus der sich insbesondere auch der Portowert für die Sendung ergibt. Ferner kann der Nutzer einen oder mehrere Zusatzservices für die Sendungen angeben, insbesondere eine CO₂-neutrale Versendung und einen Rollenservice für runde Sendungen.

Wenn der Warenkorb wenigstens einen Eintrag enthält, ist auf der Webseite NOW 1 ein weiterer Button aktiv, über den der Kunde einen Bezahlvorgang einleiten kann. Dieser erfolgt anhand eines Online-Zahlungsverfahrens, wobei der Kunde insbesondere zwischen einer Online-Überweisung und einer Zahlung per PayPal wählen kann.

Nach erfolgter Bezahlung des Warenkorbs gelangt der Kunde auf eine Webseite (NOW 3), die Links zu PDF-Dokumenten enthält, welche den Druck der erworbenen Frankierlabel ermöglichen. Ferner wird nach der Bezahlung eine E-Mail an Kunden gesendet, die einen Link auf die Webseite NOW 3 enthält, über den die Webseite auch zu einem späteren Zeitpunkt wieder aufgerufen werden kann. Die E-Mail wird an eine Adresse gesendet, die der Kunde zuvor auf der Webseite NOW 1 eingegeben hat. Überschreitet der Wert des Warenkorbs einen bestimmten Betrag, so wird der Zugriff auf die Webseite NOW 3 über den in der E-Mail enthaltenen Link durch eine PIN abgesichert.

Eine Weiterbildung der Erfindung beinhaltet eine Gutscheinfunktionalität, die es einem Kunden ermöglicht, Gutscheine zu erwerben und für die Bezahlung von Frankiervermerken einzusetzen. Die Gutscheine können dem Warenkorb auf der Webseite NOW 1 hinzugefügt werden. Über einen entsprechenden Button auf dieser Webseite gelangt der Nutzer auf eine weitere Webseite (NOW 2 - Gutschein-Details), auf der dem Warenkorb Gutschein-Sets für ein ebenfalls auf dieser Seite ausgewähltes Basisprodukt hinzugefügt werden können. Nach der Bezahlung des Warenkorbs wird dem Benutzer auf der Webseite NOW 3 für jeden erworbenen Gutschein ein Gutscheincode angezeigt. Zur späteren Einlösung des Gutscheins wird der Gutscheincode von dem Kunden bei der Generierung des Warenkorbs auf der Webseite NOW 1 eingegeben.

Die Erfindung eignet sich für eine Erstellung unterschiedlicher Label, insbesondere zur Erzeugung von Labeln zur Steuerung von logistischen Funktionen der Postsendungen, insbesondere ihrer Beförderung, Sortierung und/oder Weiterleitung. Die Label enthalten hierfür beispielsweise geldwerte Informationen als Zahlungsnachweis, so dass es sich beispielhaft um Frankierlabel handelt.

Es ist jedoch gleichfalls möglich, dass die Label weitere Informationen zur Handhabung der Postsendungen - beispielsweise eine Absenderadresse, eine Empfängeradresse oder einen Sendungsidentifikationscode - beinhalten. Hierdurch ist ein Einsatz der Label zu einer Überwachung des Sendungsverlaufs (Tracking) beziehungsweise zu einem Nachweis des Sendungsverlaufs (Tracing) möglich.

In einer bevorzugten Ausgestaltung enthalten die Label neben der Anschrift des Empfängers und des Absenders einen der Empfängeradresse zugeordneten Leitcode, der bei der Produktion der Postsendungen in einem Paket- bzw. Briefzentrum eines Versanddienstleisters genutzt wird.

In einer besonders bevorzugten Ausführungsform beinhaltet das Label einen eindeutigen Labelidentifikationscode. Anhand des Labelidentifikationscodes können Missbrauchsfälle ermittelt werden, bei denen ein Frankierlabel mehrfach für die Frankierung von Postsendungen verwendet wird. Hierzu werden die Labelidentifikationscodes der ausgegebenen Frankierlabel in einem Entgeltsicherungssystem gespeichert. Bei der Produktion einer Sendung wird der Labelidentifikationscode in dem Entgeltsicherungssystem als verwendet markiert. Ferner wird für jede produzierte Sendung überprüft, ob der Labelidentifikationscode als ungültig markiert ist. Ist dies der Fall, wird ein Missbrauchsfall festgestellt. Leitcode und Labelidentifikationscode werden sowohl in Klarschrift als auch in Form eines Barcodes in das Label eingebracht. Die Frankierlabel werden dem Kunden anhand von intelligenten PDF-Dokumenten bereitgestellt.

Die Erfindung beinhaltet verschiedene Ausführungsformen zur Erzeugung des Labels und zu seinem Ausdruck. Besonders bevorzugte Ausführungsformen sind nachfolgend genannt:
Nach der Bezahlung des Warenkorbs durch den Kunden erhält der POP-Server eine Benachrichtigung über die erfolgte Zahlungstransaktion von dem Zahlungsprovider. Daraufhin wird in einer Dokumentendatenbank ein Datensatz für das von dem Kunden erworbene Frankierlabel erzeugt. Der Datensatz enthält insbesondere einen eindeutigen Dokumentenidentifikationscode für das intelligente PDF-Dokument, eine Angabe darüber, ob das Label bereits mit gültigen Codes gedruckt worden ist, sowie Formulardaten. Die Formulardaten umfassen die Absender- und Empfängeradresse der zu frankierenden Postsendungen, den Leitcode. Zudem beinhalten die Formulardaten den Labelidentifikationscode, der nach der Bezahlung aus einem Pool mit zuvor generierten Codes entnommen wird. Dieser Code wird zudem auch an das Entgeltsicherungssystem übertragen. Ferner wird ein intelligentes PDF-Dokument erzeugt, bei dem es sich um ein leeres Formular mit Formularfeldern für die zuvor genannten Formulardaten handelt. Als Bezeichnung des PDF-Dokuments dient der Dokumentenidentifikationscode.

Der Druck des Labels erfolgt im Rahmen des iPDF-Mechanismus anhand einer Kommunikation zwischen dem Nutzerclient und dem POP-Server bzw. einem mit dem POP-Server verbundenen Lizenzserver, der auf die Dokumentendatenbank zugreifen kann. Für die Kommunikation zwischen dem Nutzerclient wird die SOAP-Schnittstelle des Acrobat Readers genutzt. Nach dem Öffnen des PDF-Dokuments wird zunächst sukzessive geprüft, ob eine Internetverbindung vorhanden ist, ob der Dokumentenidentifikationscode gültig ist und ob das Label nicht bereits gedruckt worden ist. Zur Durchführung der letzten beiden Prüfungsschritte wird über die SOAP-Schnittstelle des Acrobat Readers ein Service des POP-Servers aufgerufen, der nach einer entsprechenden Abfrage der Datenbank zurückmeldet, ob ein Datensatz für den Dokumentenidentifikationscode in der Dokumentendatenbank vorhanden ist, und ob der Frankiervermerk bereits als gedruckt markiert worden ist.

Nach erfolgreicher Durchführung der Prüfungsschritte werden die in der Datenbank gespeicherten Formulardaten mit Ausnahme der gültigen Codes über die Schnittstelle des Acrobat Readers vom POP-Server geladen und in die Formularfelder des PDF-Dokuments eingebracht. Anstelle der gültigen Codes enthält das PDF-Dokument zunächst nur Dummy-Codes, um zu verhindern, dass der Nutzer eine Kopie eines gültigen Labels anfertigen kann. Ferner ist der Inhalt des Dokuments zunächst deutlich als Muster markiert. Für den Druck stellt das PDF-Dokument eine eigene Funktionalität bereit, bei der Testdrucke sowie ein Druck eines gültigen Labels - nachfolgend Portodruck genannt - über entsprechende Schaltflächen innerhalb des Dokuments durchgeführt werden können. Bei einem Testdruck wird das zunächst in dem PDF-Dokument enthaltene Muster des Labels mit den Dummy-Codes gedruckt. Bei einem Portodruck wird das gültige Label gedruckt, wobei die gültigen Barcodes nach einer Betätigung der entsprechenden Schaltfläche von dem POP-Server abgerufen werden. Ferner wird aufgrund der Betätigung der Schaltfläche für den Portodruck in der Dokumentendatenbank des POP-Servers eingetragen, dass ein Druck des gültigen Labels erfolgt ist und die Schaltfläche wird ausgeblendet bzw. funktionslos geschaltet.

Bei einem erneuten Öffnen des Dokuments nach einem Portodruck wird anhand der zunächst durchgeführten Prüfungsschritte festgestellt, dass das Label bereits einmal ausgedruckt worden ist. Zumindest ein Portodruck wird in diesem Fall nicht mehr gestattet.

Das Label kann unterschiedliche Gestalt aufweisen. Es ist vorzugsweise so gestaltet, dass es eine Identifikation und/oder Steuerung von Postsendungen und gegebenenfalls auch die Koordination eines Lagerplatzes ermöglicht.

Zweckmäßigerweise sind die Label kratz- und schlagfest sowie temperaturbeständig.

Beispiele derartiger Label sind:
- Barcode-Label,
- EAS-Etiketten,
- Etiketten für Warenverfolgung,
- intelligente Etiketten,
- Inventuretiketten,
- Palettenetiketten,
- Sicherheitsetiketten,
- Thermoetiketten,
- Thermotransferetiketten,
- Transponderetiketten.

In die Label werden codierte Informationen als Steuerungsinstrumente für die Paketlogistik eingebracht.

Insbesondere können die Label eine fortlaufende Nummerierung - gegebenenfalls mit Prüfziffer -, sonstige Nummerierungen sowie Adressangaben enthalten.

Ein zu druckendes Label wird mit einem PDF-Umschlag versehen. Innerhalb dieses Umschlags wird in Kommunikation mit dem Server 103 eine Übertragung der Lizenzierungsinformationen 304 ermöglicht, die statisch oder dynamisch übertragen werden können.

Durch Einbeziehung der Lizenzierungsinformationen 304 wird somit ein Lizenzservice für den Druck des PDF-Umschlages bereitgestellt. Der Lizenzservice steuert den Druck des in dem PDF-Umschlag enthaltenen Dokumentes.

Da auf diese Weise intelligente Dokumente bereitgestellt werden, werden sie nachfolgend als iPDF bezeichnet.

Folgende Prozessschritte werden hierbei vorgenommen: POP-Anwendung: Während der Generierung (oder eventuell auch im Vorfeld) des PDF wird jedes PDF mit einer eindeutigen, durch den Nutzer nicht durch Ausprobieren zu erratende Dokument-ID verknüpft.

Diese Dokument-ID wird bei einer Weiterbildung der Erfindung einerseits in das iPDF eingebettet, andererseits auch in einer Datenbanktabelle einer Datenbank, beispielsweise der POP-Anwendung eingefügt.

Die Datenbank kann sich auf einem beliebigen Server befinden. Vorteilhaft ist ein Zugang via Datenbank-Connect, so dass von der Anwendung (Web-basiert, Java-Entwicklung) geeignete Anweisungen, beispielsweise SQL Kommandos (Insert und Updates) gesendet werden können.

Aus Performance und Sicherheitsaspekten ist eine Integration der genannten Komponenten vorteilhaft

Für die Umsetzung der Verhinderung von Mehrfachdrucken werden innerhalb des zum Anwender gelieferten PDFs Mechanismen eingebaut, die vor jedem Druck überprüfen, ob das Dokument bereits einmal gedruckt wurde.

Für diese Überprüfung muss aus dem Acrobat Reader eine Verbindung mit einem von der POP - Anwendung gestellten Service aufgenommen werden, über die diese Überprüfung vorgenommen wird.

Nachdem der Nutzer über die Bezahlfunktionalität der Anwendung ein Produkt gekauft hat, sind auch alle Daten für die Generierung der PDFs vorhanden.

Zu diesem Zeitpunkt generiert die Serveranwendung für jedes aus dem Warenkorb zu generierenden PDF einen Datensatz, in dem alle für die Generierung notwendigen Angaben bereits vollständig aufgelöst sind.

Ein für die Kontrolle des Einmaldrucks vorteilhafter Datensatz ist nachfolgend dargestellt.

### Dokumenten-Datensatz

| **Feldname** | **Typ** | **Beschreibung** |
|---|---|---|
| Dokument-ID | ID (PK) | ID des Dokumentes. Diese ID ist auch im dem ausgelieferten iPDF-Umschlags eingebettet. |
| CreateDate | TimeStamp | Zeitstempel der Erzeugung der PDF |
| ValidUntil | TimeStamp | Gültig bis |
| Printed | TimeStamp | Wurde das PDF bereits gedruckt. |
| DownloadedFirst | TimeStamp | Wann wurde das PDF erstmals geladen. |
| DownloadedLast | TimeStamp | Wann wurde das PDF zuletzt geladen. |
| DownloadCounter | Integer | Wie oft wurde das PDF geladen. |
| FormularData | Blob | Die Formulardaten des PDF. Hierunter fallen: Absender- und Empfängeradressen. Codes für Barcodes. Produkt-Services (z.B. Paket grün) Informationen zu gewählten Zusatzservices, soweit diese den Eindruck betreffen. |

*FormularData* hält in einer strukturierten Form (XML) bezüglich der einzudruckenden Daten alle bereits aufgelösten Daten. So werden z. B. die bereits generierten Päckchen-Identifizierer, Leitcodes und evt. weitere Angaben (auch Preise, auch wenn dies zurzeit nicht vorgesehen ist) bereits als Zahlen oder Zeichenketten vorgehalten. Eine nachträgliche Berechnung solcher Daten ist nicht vorgesehen, da diese evtl. zu anderen Ergebnissen kommen könnte.

Weiterhin müssen in diesem *FormularData*-Feld Referenzen auf die PDF-Vorlage sowie die Koordinaten für den Eindruck vorgehalten werden. Hierfür werden Ressourcen-IDs aus dem Konfigurations-Repository verwendet. Da sich die hinter einer Ressourcen-ID stehende Ressource während der Lebenszeit der Anwendung (sprich auch bei geänderter Version durch Änderung der Anwendungskonfiguration) nicht ändert, wird eine Generierung des PDF stets zu gleichen Ergebnissen kommen.

Es ist zweckmäßig, eine Sichtbarkeit von Daten nach Ablauf eines vorgebbaren Zeitintervalls zu unterdrücken. Diese Daten sind bei einer derartigen Unterdrückung noch für interne Administrationszwecke und zum Nachweis von Buchführungspflichten einsehbar, jedoch von einer Einsichtnahme oder gar Benutzung oder Veränderung durch Benutzer geschützt.

Auf die dargestellte Weise ist es möglich PDFs oder andere intelligente Dokumente im Sinne der Erfindung anhand eines Dokumenten-Datensatzes zu generieren. Der Dokumenten-Datensatz hat beispielsweise die zuvor dargestellten Feldinhalte.

Nach Aufruf einer geeigneten Aufforderung kann dem Nutzer über eine URL eine Dokument-ID für den späteren Download in Form einer URL zur Verfügung gestellt werden.

### Beispiel:

### http://pop.dhl.de/getPDF?documentId=abxkd12fszo8afwg30y

Anhand der Dokument-ID kann direkt ein PDF erzeugt werden.

Da das vom Nutzer downgeloadete Dokument lediglich ein leeres Formular darstellt, kann ein allgemeines - eventuell für jedes Produkt (Produktschlüssel) individuelles - PDF zur Verfügung gestellt werden.

Das Servlet, das das PDF ausliefert, sollte nun den Dateinamen für das PDF so umbenennen, dass die Dokument-ID im Dateinamen enthalten ist.

### Signieren des Dokumentes beziehungsweise der Dokumentvorlage über ARES 306

Die Vorlagen zur Erstellung der Dokumente, nachfolgend Dokumentvorlagen genannt, werden vorzugsweise offline während einer Entwicklungs- bzw. Vorbereitungsphase für ein neues Produkt oder einen neues Verfahren, insbesondere ein Transportverfahren, für mit dem Label zu versehende Güter durch den Acrobat Reader Extension Server ARES signiert.

Die durch ARES 306 signierte Dokumentvorlage wird dann in der Anwendung in das Konfigurations-Repository eingespielt.

Das Signieren des Dokuments und/oder der Dokumentvorlage über ARES 306 ermöglicht es, einen Schlüsselwert anhand des Inhaltes des PDFs zu generieren. Hierdurch wird der Adobe-Reader (Leseprogramm), der diese Signatur überprüft, gesteuert, d.h. nur wenn die im Reader erzeugte Signatur und die im Dokument enthaltene Signatur übereinstimmen, werden die Funktionen - die Intelligenz - des Dokuments aktiviert.

Eine derartige Aktivierung von Funktionen ist auch mit anderen Programmen, welche die dargestellten Überprüfungsmechanismen beinhalten, möglich.

Dementsprechend können die Dokumente mit jedem Programm, das die dargestellten Funktionen aufweist, bearbeitet werden.

### iPDF Umschlag, Muster- und Portodokument

Nachdem der Anwender das generierte PDF herunter geladen hat, wird ihm auf der ersten Seite der Umschlag des PDF angezeigt.

Es ist vorteilhaft bei dem Laden des PDFs in einem geeigneten Leseprogramm, insbesondere einem Acrobat Reader, einzelne, mehrere oder sämtliche folgender Prüfschritte vorzunehmen:
- Kompatibilität des Leseprogramms,
- Bestehen einer Internetverbindung,
- Gültigkeit der Dokumenten-ID,
- Überprüfung, ob bereits ein Ausdruck erfolgte.

Für die letzten beiden Prüfungen wird über die SOAP-Schnittstelle des Acrobat Readers ein von der Anwendung zur Verfügung gestellter Service aufgerufen, der zurückgibt, ob die übermittelte Dokumenten-ID vorhanden ist und/oder bereits als gedruckt in der Datenbank markiert wurde.

Mittels der Dokument-ID werden dann die Formularfelder über die SOAP-Schnittstelle vom POP-eigenen Server geladen und in die Formularfelder gefüllt.

Konnte die Dokumenten-ID nicht ermittelt werden - z.B. da der Anwender das PDF-Dokument umbenannt hatte -, wird er über ein Acrobat Formfeld aufgefordert, die Dokumenten-ID einzugeben. Die Dokumenten-IDs werden dem Nutzer in der ihm zugesendeten Email zusätzlich mitgeteilt.

Für den Musterdruck der Barcodes/Matrixcodes werden Dummy-Codes erzeugt, die gegebenenfalls jedoch bereits mit korrekten Absender- und/oder Empfängerdaten in Klarschrift versehen sind. Die vollständigen Barcodes - insbesondere mit in ihnen enthaltenen geldwerten Informationen - werden erst für einen Druck eines gültigen Frankiervermerks (Portodruck) beispielsweise durch JavaScript kurzzeitig gesetzt.

### Verwendete PDF-Reader Funktionalität (Technologie)

Für die dynamische Abfrage des Lizenzservers aus dem Acrobat Reader heraus nutzt die Anwendung folgende JavaScript-Funktionen:
- app.viewerVersion: Für das Überprüfen der Reader-Version.
- SOAP.*: Für das Prüfen auf Internetverbindung.
- document.getField("feldname").display = display.hidden / display.visible: Für das Ein- und Ausblenden von "Muster"-Überdrucken.
- document.print({bUI: true, nStart: 1, nEnd: 1, bSilent: true, bAnnotation: true}) bzw. document.print({bUI: false, nStart: 1, nEnd: 1, bSilent: true, bAnnotation: true}) für das direkte Drucken des Dokumentes ohne Nutzerinteraktion.
- Die eigentlich zu druckenden PDFs werden als Annotation-Formfelder hinterlegt (ursprünglich für ein visuelles Feedback - z.B. beim Drücken eines Buttons - gedacht, um zwischen gedrücktem und nicht gedrücktem Zustand zu unterscheiden) und nur unmittelbar vor dem Druck auf "visible" geschaltet.
- Barcode-Felder. Der Acrobat Reader unterstützt Formfelder, die zu einem Wert (i.d.R. Zahlenwert) einen entsprechenden Barcode anzeigen.
- Alternativ können für Barcode-Felder spezielle Fonts verwendet werden, die in dem Dokument eingebettet werden.
- Für Barcodetypen, die der Acrobat Reader weder intern noch durch zusätzliche Schriftarten unterstützt, kann der Barcode als Bitmap-Image über eine externe URL geladen werden. Hierzu müsste in der Anwendung ein Servlet-Service implementiert werden, der das entsprechende Bitmap generiert und zur Verfügung stellt.

Die dargestellten Funktionalitäten weisen mehrer Vorteile auf:
Da der Nutzer keine individualisierten PDF downloaded, müssen die PDFs nur pro Template/Produkt über den ARES-Server signiert werden.

Das hat zur Konsequenz, dass ein ARES 306 während des Normalbetriebes von der Anwendung nicht benötigt wird.

Es ist zweckmäßig, den ARES 306 für eine Einführung neuer Dokumenttypen - insbesondere für eine Einführung neuer Produkte eines Diensteanbieters - einzusetzen, um einmal das entsprechende PDF zu signieren. Innerhalb der Anwendung wird dann das signierte Dokument als Ressource eingeführt. Diese Installation des ARES 306 kann auf einem beliebigen Rechner geschehen. Das Interface für das Signieren einer Dokumentvorlage kann einfach gestaltet sein.

Der Download der PDFs ist ein einfaches - quasi statisches - Ausliefern einer Datei durch die Pop-Anwendung. Eventuell Performance-relevante Prozesse für den Eindruck entfallen.

Die PDFs können mit Standardwerkzeugen, die beispielsweise von dem Unternehmen Adobe bereitgestellt werden, erstellt werden (mit Acrobat-Professional kann die Position der Formfelder definiert werden). Das Befüllen der PDF-Formfelder innerhalb des Acrobat Readers ist eine Standardfunktion.

Weiterhin entfallen durch den Wegfall der Notwendigkeit des Signierens jedes einzelnen individuellen PDFs auch an dieser Stelle eventuell auftretende Fehlerquellen beziehungsweise Performance-Engpässe.

Die zuvor gewählte Darstellung bezieht sich auf PDF-Dokumente. Es ist jedoch gleichfalls möglich, Dokumente und Programme mit vergleichbaren Funktionen einzusetzen.

Dokumente im Sinne der vorliegenden Erfindung sind vorzugsweise graphisch darstellbar. Je nach Einsatzgebiet sind sie manuell oder maschinell erfassbar. Es ist je nach Einsatzgebiet ferner zweckmäßig, eine Verschlüsselung vorzusehen.

Die dargestellten Ausführungsformen der Erfindung sind mit einer Vielzahl von Vorteilen verbunden:
- Es ist möglich, das Layout der Label auf einfache Weise zu ändern und in begrenztem Umfang sogar die Funktionalität des "intelligenten PDFs" anzupassen, ohne die Anwendung (anders wie bei Stampit-Web) neu ausrollen zu müssen, d.h. es wird nur die PDF-Vorlage ausgetauscht.

Alternativ ist es möglich, eine neue Formatvorlage via Konfigurations-Update / Admin-Tool auf die Produktionssysteme bereitzustellen.
- Es wird eine Performance-Steigerung erzielt, so dass weniger Serverkapazität benötigt wird.
- Datenschutz und Sicherheit werden erhöht, denn im PDF - in der PDF-Vorlage - sind keine anwendungsspezifischen Daten, Adressen,

Produktinformationen,...) enthalten, auch nicht, wenn das PDF abgespeichert wird, nachdem die Daten via SOAP-Call zum Drucken übertragen wurden und/oder der Druck angestoßen wurde.
• In besonders bevorzugten Ausgestaltungen der Erfindung ist es möglich, die Konfiguration von Clients (Benutzersystemen) - insbesondere von eingesetzten Computern der Benutzer - ggf. einschließlich eingesetzter Programmversionen zu ermitteln und ggf. auch zu protokollieren.

Ein Einsatz von Kennungsdaten erhöht die Datensicherheit weiter. Die Kennungsdaten werden vorzugsweise dadurch erkannt, dass eine Signatur für den jeweiligen dynamischen Inhalt erstellt und dass diese Signatur mit dem jeweiligen dynamischen Inhalt übertragen wird.

Zweckmäßigerweise wird die Signatur im Ziel einer jeweils erfolgenden Kommunikation (Zielsystem) erneut erstellt und der sich ergebende Wert - insbesondere Hash-Wert - mit dem sich aus der übertragenen Signatur ergebenden Wert verglichen.

Durch den Vergleich der Werte ist es möglich, eine Manipulation der Inhalte zu verhindern, da die jeweilige Anwendungslogik nur dann aktiv wird, wenn die Prüfungen korrekt verlaufen sind.

Die Erfindung beinhaltet auch einen Einsatz anderer Programme als die dargestellten.

Insbesondere ist es möglich, unter Einsatz der dargestellten Ausgestaltung des Systems und der Vorrichtung andere als die zuvor dargestellten Computerprogramme einzusetzen.

Ebenso ist es möglich, andere Dateiformate einzusetzen.

Eine Auswahl der Software sollte so erfolgen, dass mit ihr eine Datei erzeugbar ist, welche folgende Eigenschaften aufweist:
1. Ein Download der Datei sollte möglich sein.
2. Eine Darstellung und ein Druck des Labels in gleicher Form (Rahmen, Logos, variabler Texte) sollte möglich sein.
3. Ein Druck von Barcode-Labels sollte möglich sein, idealerweise durch Einbindung von FONTs.
4. Eine Applikationslogik (via Java-Script, Visual Basic, .net, ....) sollte in der Datei verwendbar/aktivierbar sein.
   Diese Eigenschaft erfüllen beispielsweise auch Adobe-Flash und eine Vielzahl von Microsoft/Windows Produkten aus dem Office-Umfeld.
4.1 Soap-Requests (HTTPs-Requests) sollten möglich sein.
4.2 Ein Druckdialog sollte über die Anwendungslogik ansteuerbar sein.
5. Die Datei sollte schreibgeschützt übertragbar sein.
6. Die Datei sollte gegen die Änderung der Applikationslogik/vor beziehungsweise während der Ausführung (insbesondere beim Drucken) geschützt sein.

Diese Anforderungen werden beispielsweise auch durch Microsoft Excel erfüllt. Zur Erhöhung der Datensicherheit empfiehlt sich hier eine entsprechende zusätzliche Verschlüsselung des eingebetteten Script-Codes, den man dann zusätzlich absichern sollte.

Es ist zweckmäßig, die intelligenten Dokumente so auszugestalten, dass sie eine Überprüfung von Programmversionen ermöglichen.

Insbesondere ist es zweckmäßig, dass die Dokumente in der Lage sind zu überprüfen, welche Version beziehungsweise welche Implementierung eines Computerprogramms und/oder welches Betriebssystem auf einem Client installiert sind.

Die Erfindung ist nicht auf die dargestellten Einsatzgebiete beschränkt.

Bei einer Erzeugung von Labeln für Postsendungen ist es zweckmäßig, dass diese Informationen zur Identifikation, zum Leitwege, zu Vorausverfügungen und zu mit dem Versandauftrag verbundenen Extraleistungen enthalten.

Weiterhin ist es zweckmäßig, dass die Label Kunden- und/oder Abrechnungsinformationen enthalten.

Die dargestellten Label dienen als Informationsträger und ermöglichen beispielsweise eine Annahme, Entgeltabrechnung, Sortierung, Verladung, Sonderbehandlung, Zustellung, Ausgabe, Abrechnung, Nachforschung, Nachbearbeitung, Betriebsdatenverarbeitung, Sendungsverfolgung (Tracking & Tracing) und Archivierung einer Sendung.

Die intelligenten Dokumente - insbesondere die Label für ein Aufbringen auf die Postsendungen - weisen bei Weiterbildungen der Erfindung Informationsblöcke auf. Hierbei ist es zweckmäßig, Datentypen und/oder Datengrößen für die Informationsblöcke festzulegen. Diese Festlegung erfolgt zweckmäßigerweise entsprechend der jeweiligen logistischen Anforderungen.

Beispiele für dynamische Inhalte, die in den statischen Rahmen eingebracht werden, sind Empfängeradresse und Angaben, welche eine Sendungsidentifikation ermöglichen, beispielsweise eine Sendungsidentifikationsnummer.

Die übermittelten Rahmeninformationen dienen zu einer übersichtlichen, strukturierten und formatierten Darstellung der dynamischen Inhalte.

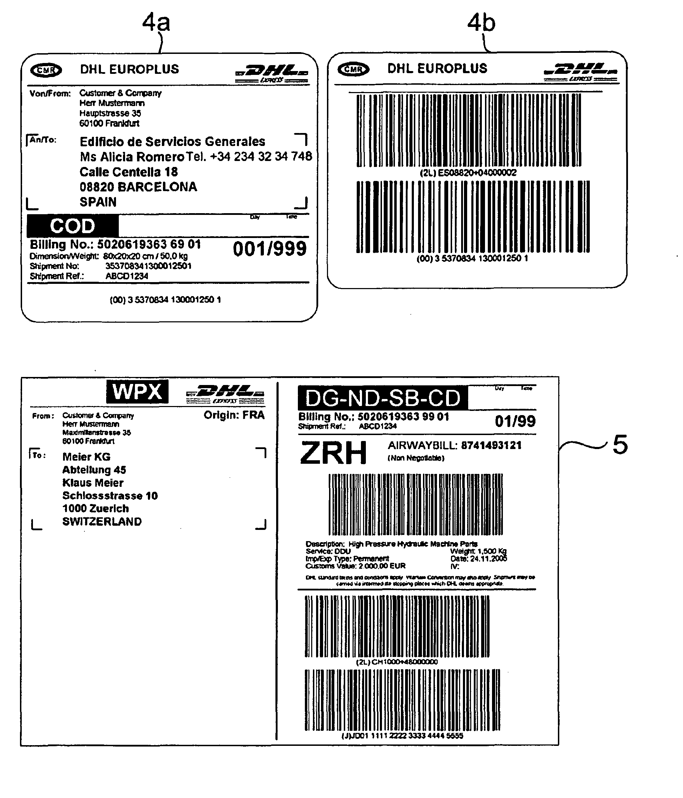

Die Figuren 4a, 4b und 5 zeigen graphische Darstellungen erfindungsgemäß erzeugter intelligenter Dokumente. Die graphischen Darstellungen können beispielsweise an einem Bildschirm eines Clients angezeigt oder ausgedruckt und gegebenenfalls - für einen Einsatz als Versandlabel für eine Postsendung - ausgedruckt werden.

Zur Erzeugung der Dokumente werden jeweils statische Inhalte von den dynamischen Inhalten getrennt übertragen.

Bei den statischen Inhalten handelt es sich beispielsweise um die in den Abbildungen eingezeichneten Rahmen und um Firmenangaben wie "DHL".

Dynamische Inhalte, die in die Sendungen eingebracht werden, sind beispielsweise Absenderangabe, Empfängerangabe, Rechnungsnummer, Größenangaben, Sendungsidentifikationsnummer und/oder gegebenenfalls auch eine Produktbezeichnung.

Fig. 4a und Fig. 4b zeigen eine Aufspaltung eines erfindungsgemäßen Labels in zwei Teillabel.

Eine alternative Darstellung ist in Fig. 5 wiedergegeben.

Fig. 5 zeigt den Labelinhalt beispielhaft in einem DIN A 4-Querformat, nebeneinander liegend.

Es ist für den Fachmann selbstverständlich, die jeweilige graphische Gestaltung der Label einschließlich der wiedergegebenen Informationen - Klarschriftanteile und Maschinenschriftanteile und gegebenenfalls verschlüsselte Informationen - entsprechend den Anforderungen von Versandunternehmen, welche die Postsendungen transportieren beziehungsweise bearbeiten, auszuwählen.

Die dynamischen Inhalte werden in einer Weiterführung der Erfindung von einem Auftraggeber eines Versandvorgangs (Versender) in elektronischer Form übermittelt. Die elektronische Übertragung der Sendungsdaten kann vor, während und nach einer physischen Übergabe der Sendungen an ein Versandunternehmen erfolgen.

Eine zeitgleiche elektronische und physische Übertragung ist jedoch zur Vereinfachung der logistischen Prozesse bevorzugt.

Zur Übertragung der Daten wird vorzugsweise ein geeigneter Nummernkreis vorgegeben.

Ferner können die Label Handhabungsinformationen - beispielsweise für Mitarbeiter des Versandunternehmens, insbesondere sondere einen Zusteller- enthalten. Es ist möglich und zweckmäßig, für die graphische Wiedergabe einzelner der Handhabungsfunktionen ein von sonstigen Labelinhalten abweichendes Format zu wählen.

Die vorherige Beschreibung von Ausführungsbeispielen der Erfindung anhand der Figuren ist illustrativ und beispielhaft zu verstehen. Die Erfindung ist nicht auf die dargestellten Ausführungsbeispiele beschränkt, sondern durch die Ansprüche.

Bei den intelligenten Dokumenten kann es sich beispielsweise um intelligente Dokumente mit animierten Graphiken oder um Formulare handeln. Insbesondere ist die Erfindung bei Formularen einsetzbar, die im Verkehr mit Behörden verwendet werden und als intelligente Dokumente ausgeführt sind.

Anhand der Prüfungsschritte, deren Ergebnisse bei der Erfindung dargestellt werden, kann dabei insbesondere auch geprüft werden, ob bestimmte Pflichtfelder eines Formulars ausgefüllt worden sind.

Darüber hinaus kann die Erfindung auch bei intelligenten Dokumenten eingesetzt werden, die mittels der "Intelligenz" vor einem unberechtigten Zugriff geschützt werden. In diesem Zusammenhang sind etwa Texte zu nennen, die nur dann angezeigt und/oder gedruckt werden können, wenn der Nutzer hierzu berechtigt ist, wobei die Berechtigung des Nutzers beispielsweise durch eine über ein Netzwerk erfolgende Serverabfrage von dem intelligenten Dokument geprüft wird.

Die unterschiedliche Handhabung von dynamischen und statischen Inhalten ermöglicht weit reichende Gestaltungsmöglichkeiten für individuell oder in zeitlichen Abständen zu erstellende und/oder zu aktualisierende Dokumente.

### Bezugszeichenliste:

- 101: Client
- 102: Netzwerk
- 103: Server
- 104: Anzeigeeinrichtung
- 105: Speicher
- 106: Prozessor
- 107: Druckeinrichtung
- 108: Datenbank
- 109: Eingabevorrichtung
- 201: Hauptbereich
- 202: Schaltfläche
- 203: Schaltfläche
- 205: Statusanzeige
- 206: Statusfeld
- 207: Statusfeld
- 208: Statusfeld
- 301: PDF-Template
- 302: Web-Server
- 303: Dokumentendatensatz
- 304: Lizenzierungsinformationen
- 305: Intelligentes Dokument (beispielsweise iPDF)
- 306: ARES

## Patentansprüche

1. Verfahren zum Erzeugen eines intelligenten Dokuments auf einem Server umfassend eine Datenbank (108) zum Protokollieren eines Vermerks über einen Druck eines Frankiervermerks, wobei die Datenbank (108) jeweils einen Eintrag für jeden erzeugten und an einen Client (101) übermittelten Frankiervermerk umfasst und wobei das intelligente Dokument ein Programm umfasst, das bei Vorliegen einer Voraussetzung mittels einer in einem Darstellungsprogramm enthaltenen Programmausführungsumgebung ausführbar ist und das mittels des Darstellungsprogramms darstellbare Inhalte zum Darstellen auf einer Anzeigeeinrichtung (104) des Clients enthält, wobei die Inhalte aus statischen Inhalten und dynamischen Inhalten bestehen und von dem Server (103) über ein Netzwerk (102) an den Client (101) getrennt voneinander übermittelt werden,
**dadurch gekennzeichnet,**
**dass** ein Einbringen der dynamischen Inhalte in das intelligente Dokument von einem Einbringen der statischen Inhalte getrennt erfolgt, wobei bereits bei Erzeugung des intelligenten Dokuments eine darstellbare Angabe eines negativen Ergebnisses eines Prüfungsschritts, ob die Programmausführungsumgebung zur Verfügung steht, in das intelligente Dokument eingebracht wird;
**dass** ein Programmmodul in das intelligente Dokument eingebracht wird, wobei das Programmmodul nach dem Öffnen des intelligenten Dokuments in dem Darstellungsprogramm bei vorhandener Programmausführungsumgebung automatisch gestartet wird;
**dass** die Prüfung, ob die Programmausführungsumgebung zur Verfügung steht, dadurch durchgeführt wird, dass das Programmmodul ausgeführt werden kann oder nicht; und
**dass** das Programmmodul die Angabe des negativen Ergebnisses des Prüfungsschritts in die Angabe einer erfolgreichen Durchführung des Prüfungsschritts umwandelt, wenn das Programmmodul ausgeführt wird, wobei bei Fehlen der Programmausführungsumgebung die darstellbare Angabe eines negativen Ergebnisses in dem Darstellungsprogramm auf der Anzeigeeinrichtung (104) des Client (101) angezeigt wird.

2. Verfahren nach Anspruch 1,
**dadurch gekennzeichnet,**
**dass** die Übertragung zeitlich getrennt erfolgt.

3. Verfahren nach Anspruch 1 oder 2,
**dadurch gekennzeichnet,**
**dass** die statischen Inhalte von einer anderen Datenquelle bereitgestellt werden als die dynamischen Inhalte.

4. Verfahren nach einem der vorangegangenen Ansprüche,
**dadurch gekennzeichnet,**
**dass** die statischen Inhalte in einem Bereich des Clients (101) gespeichert werden.

5. Verfahren nach einem der vorangegangenen Ansprüche,
**dadurch gekennzeichnet,**
**dass** die statischen Inhalte bei Vorliegen eines ersten Ereignisses übermittelt werden.

6. Verfahren nach einem der vorangegangenen Ansprüche,
**dadurch gekennzeichnet,**
**dass** die dynamischen Inhalte bei Vorliegen eines zweiten Ereignisses übermittelt werden.

7. Verfahren nach Anspruch 6,
**dadurch gekennzeichnet,**
**dass** sich das erste Ereignis von dem zweiten Ereignis unterscheidet.

8. Verfahren nach einem der vorangegangenen Ansprüche,
**dadurch gekennzeichnet,**
**dass** ein weiteres Programmmodul in das intelligente Dokument insbesondere zur Prüfung einer Netzwerkumgebung und eines noch nicht ausgeführten Drucks, eingebracht wird, das dazu ausgebildet ist, eine darstellbare Angabe (207; 208) eines Ergebnisses eines weiteren Prüfungsschritts zur Prüfung des Vorliegens der Voraussetzung innerhalb des intelligenten Dokuments zu erzeugen.

9. Verfahren nach Anspruch 8,
**dadurch gekennzeichnet,**
**dass** der weitere Prüfungsschritt mittels des weiteren Programmmoduls durchgeführt wird.

10. Verfahren nach Anspruch 8,
**dadurch gekennzeichnet,**
**dass** das Programm einen einmaligen Druck eines Frankiervermerks steuert.

11. Verfahren nach Anspruch 10,
**dadurch gekennzeichnet,**
**dass** bei einem ersten Druck des Frankiervermerks eine Nachricht von dem Client (101) an den Server (103) übermittelt wird und dass der Druck aufgrund der Nachricht in der Datenbank (108) des Servers (103) protokolliert wird.

12. Verfahren nach einem der Ansprüche 10 oder 11,
**dadurch gekennzeichnet,**
**dass** das Programm zur Steuerung des Drucks des Frankiervermerks nur dann ausführbar ist, wenn eine Netzwerkverbindung zwischen dem Client (101) und dem Server (103) besteht und wenn anhand einer Abfrage des Servers (103) festgestellt worden ist, dass der Frankiervermerk noch nicht gedruckt worden ist.

13. Verfahren nach einem der Ansprüche 8 bis 12,
**dadurch gekennzeichnet,**
**dass** in dem weiteren Prüfungsschritt überprüft wird, ob ein Zugriff auf das Netzwerk besteht.

14. Verfahren nach einem der Ansprüche 8-12,
**dadurch gekennzeichnet,**
**dass** in dem weiteren Prüfungsschritt eine Abfrage des Servers (103) vorgenommen wird, bei der überprüft wird, ob Inhalte des intelligenten Dokuments bereits einmal gedruckt worden sind.

15. Computerprogrammprodukt,
**dadurch gekennzeichnet,**
**dass** es ein Computerprogramm zur Ausführung eines Verfahrens nach einem der vorangegangenen Ansprüche enthält.

16. Vorrichtung zur Durchführung des Verfahrens nach Anspruch 1 zum Erzeugen eines intelligenten Dokuments auf einem Server umfassend eine Datenbank (108) zum Protokollieren eines Vermerks über einen Druck eines Frankiervermerks, wobei die Datenbank (108) jeweils einen Eintrag für jeden erzeugten und an einen Client (101) übermittelten Frankiervermerk umfasst, umfassend ein Programm, das bei Vorliegen einer Voraussetzung mittels einer in einem Darstellungsprogramm enthaltenen Programmausführungsumgebung ausführbar ist, und das mittels des Darstellungsprogramms darstellbare Inhalte zum Darstellen auf einer Anzeigeeinrichtung (104) des Clients enthält, wobei die Inhalte aus statischen Inhalten und dynamischen Inhalten bestehen und von dem Server (103) über ein Netzwerk (102) an den Client (101) getrennt voneinander übermittelt werden, wobei die Vorrichtung dazu eingerichtet ist, ein Programmmodul, das nach dem Öffnen des intelligenten Dokuments in dem Darstellungsprogramm bei vorhandener Programmausführungsumgebung automatisch gestartet wird, in das intelligente Dokument einzubringen, das dazu ausgebildet ist, eine darstellbare Angabe eines Ergebnisses eines Prüfungsschritts zur Prüfung des Vorliegens der Voraussetzung innerhalb des intelligenten Dokuments zu erzeugen, wobei bereits bei Erzeugung des intelligenten Dokuments die darstellbare Angabe eines negativen Ergebnisses des Prüfungsschritts, ob die Programmausführungsumgebung zur Verfügung steht, in das intelligente Dokument eingebracht wird und die Prüfung, dadurch durchgeführt wird, dass das Programmmodul ausgeführt werden kann oder nicht und
dass das Programmmodul die Angabe des negativen Ergebnisses des Prüfungsschritts in die Angabe einer erfolgreichen Durchführung des Prüfungsschritts umwandelt, wenn das Programmmodul ausgeführt wird, wobei bei Fehlen der Programmausführungsumgebung die darstellbare Angabe eines negativen Ergebnisses in dem Darstellungsprogramm auf der Anzeigeeinrichtung (104) des Client (101) angezeigt wird.

## Claims

1. A method for generation of an intelligent document on a server comprising a database (108) for logging a message about the printing of a postage indicium, whereby the database (108) comprises an entry for each postage indicium that has been generated and transmitted to a client (101), and whereby the intelligent document contains a program that, if a certain prerequisite is present, can be executed by means of a program execution environment contained in a display program and said program contains contents that can be displayed by means of the display program on a display device (104) of the client, whereby the contents consist of static contents and dynamic contents and are transmitted separately from each other by the server (103) via a network (102) to the client (101),
**characterized in that**
the insertion of the dynamic contents into the intelligent document is carried out separately from the insertion of the static contents, whereby, already when the intelligent document is generated, displayable information indicating a negative result of a checking step as to whether the program execution environment is available is inserted into the intelligent document; **in that** a program module is inserted into the intelligent document, whereby, after the intelligent document has been opened in the display program, the program module is automatically started if the program execution environment is present;
**in that** the checking as to whether the program execution environment is available is carried out by ascertaining whether the program module can be executed or not; and
**in that**, if the program module is executed, the program module converts the information indicating the negative result of the checking step into the information indicating a successful execution of the checking step, whereby, if the program execution environment is not present, the displayable information indicating the negative result is displayed in the display program on the display device (104) of the client (101).

2. The method according to claim 1,
**characterized in that**
each transmission takes place at a different time.

3. The method according to claim 1 or 2,
**characterized in that**
the static contents are provided by a data source that differs from that for the dynamic contents.

4. The method according to one of the preceding claims,
**characterized in that**
the static contents are stored in an area of the client (101).

5. The method according to one of the preceding claims,
**characterized in that**
the static contents are transmitted when a first event has occurred.

6. The method according to one of the preceding claims,
**characterized in that**
the dynamic contents are transmitted when a second event has occurred.

7. The method according to claim 6,
**characterized in that**
the first event differs from the second event.

8. The method according to one of the preceding claims,
**characterized in that**
another program module is inserted into the intelligent document, especially in order to check a network environment and to check whether a printing procedure has already been carried out, said program module being configured to generate displayable information (207; 208) indicating the result of another checking step that serves to check whether the prerequisite is present in the intelligent document.

9. The method according to claim 8,
**characterized in that**
the additional checking step is carried out by means of the additional program module.

10. The method according to claim 8
**characterized in that**
the program controls the one-time printing of a postage indicium.

11. The method according to claim 10,
**characterized in that**
when the postage indicium is printed for the first time, a message is transmitted from the client (101) to the server (103), and **in that**, on the basis of this message, the printing is logged in the database (108) of the server (103).

12. The method according to claim 10 or 11,
**characterized in that**
the program for controlling the printing of the postage indicium can only be executed if a network connection exists between the client (101) and the server (103), and if, on the basis of a query to the server (103), it has been ascertained that that postage indicium had not been printed before.

13. The method according to one of claims 8 to 12,
**characterized in that**
during the additional checking step, it is checked whether there is access to the network.

14. The method according to one of claims 8 to 12,
**characterized in that**
during the additional checking step, a query to the server (103) is made in which it is checked whether contents of the intelligent document have already been printed before.

15. A computer program product,
**characterized in that**
it contains a computer program for executing a method according to one of the preceding claims.

16. A device for executing the method according to claim 1 for-generation of an intelligent document on a server comprising a database (108) for logging a message about the printing of a postage indicium, whereby the database (108) comprises an entry for each postage indicium that has been generated and transmitted to a client (101), comprising a program that, if a certain prerequisite is present, can be executed by means of a program execution environment contained in a display program, and said program contains contents that can be displayed by means of the display program on a display device (104) of the client, whereby the contents consist of static contents and dynamic contents and are transmitted separately from each other by a server (103) via a network (102) to the client (101), whereby the device is configured to insert into the intelligent document a program module that - after the intelligent document has been opened in the display program - is automatically started if the program execution environment is present, said program module being configured to generate displayable information indicating the result of a checking step that serves to check whether the precondition is present in the intelligent document, whereby already when the intelligent document is generated, displayable information indicating a negative result of the checking step as to whether the program execution environment is available is inserted into the intelligent document, and the checking is carried out by ascertaining whether the program module can be executed or not, and
that, if the program module is executed, the program module converts the information indicating the negative result of the checking step into the information indicating a successful execution of the checking step, whereby, if the program execution environment is not present, the displayable information indicating the negative result is displayed in the display program on the display device (104) of the client (101).

## Revendications

1. Procédé destiné à la génération d'un document intelligent sur un serveur comprenant une base de données (108) pour enregistrer une remarque relative à une impression d'une marque d'affranchissement, la base de données (108) comprenant respectivement une entrée pour chaque marque d'affranchissement générée et transmise à un client (101) et le document intelligent comprenant un programme qui, en présence d'une condition, peut être exécuté au moyen d'un environnement d'exécution de programme contenu dans un programme de représentation et qui contient des contenus pouvant être représentés au moyen du programme de représentation pour représentation sur un dispositif d'affichage (104) du client, les contenus étant composés de contenus statiques et de contenus dynamiques et étant transmis séparément les uns des autres du serveur (103) au client (101) sur un réseau (102), **caractérisé en ce que** :
- une introduction des contenus dynamiques dans le document intelligent a lieu de manière séparée d'une introduction des contenus statiques, une mention représentable d'un résultat négatif d'une étape de contrôle visant à établir si l'environnement d'exécution de programme est disponible étant introduite dans le document intelligent dès la génération du document intelligent ;
- un module de programme est introduit dans le document intelligent, le module de programme étant démarré automatiquement après l'ouverture du document intelligent dans le programme de représentation en présence de l'environnement d'exécution de programme ;
- le contrôle de la disponibilité de l'environnement d'exécution de programme est effectué par le fait que le module de programme peut être exécuté ou non, et
- le module de programme convertit la mention du résultat négatif de l'étape de contrôle en la mention d'une exécution réussie de l'étape de contrôle lorsque le module de programme est exécuté, la mention représentable d'un résultat négatif étant, en l'absence de l'environnement d'exécution de programme, affichée dans le programme de représentation sur le dispositif d'affichage (104) du client (101).

2. Procédé selon la revendication 1, **caractérisé en ce que** la transmission a lieu séparément dans le temps.

3. Procédé selon la revendication 1 ou 2, **caractérisé en ce que** les contenus statiques sont mis à disposition par une source de données autre que dans le cas des contenus dynamiques.

4. Procédé selon l'une des revendications précédentes, **caractérisé en ce que** les contenus statiques sont stockés dans une zone du client (101).

5. Procédé selon l'une des revendications précédentes, **caractérisé en ce que** les contenus statiques sont transmis en présence d'un premier événement.

6. Procédé selon l'une des revendications précédentes, **caractérisé en ce que** les contenus dynamiques sont transmis en présence d'un deuxième événement.

7. Procédé selon la revendication 6, **caractérisé en ce que** le premier événement est différent du deuxième événement.

8. Procédé selon l'une des revendications précédentes, **caractérisé en ce qu'**est introduit dans le document intelligent, en particulier pour contrôler un environnement de réseau et une impression non encore exécutée, un autre module de programme qui est conçu pour générer une mention représentable (207 ; 208) d'un résultat d'une autre étape de contrôle pour contrôler la présence de la condition au sein du document intelligent.

9. Procédé selon la revendication 8, **caractérisé en ce que** l'autre étape de contrôle est exécutée au moyen de l'autre module de programme.

10. Procédé selon la revendication 8, **caractérisé en ce que** le programme commande une impression unique d'une marque d'affranchissement.

11. Procédé selon la revendication 10, **caractérisé en ce que**, lors d'une première impression de la marque d'affranchissement, un message est transmis du client (101) au serveur (103) et **en ce que** l'impression est enregistrée sur la base du message dans la base de données (108) du serveur (103).

12. Procédé selon l'une des revendications 10 ou 11, **caractérisé en ce que** le programme de commande de l'impression de la marque d'affranchissement ne peut être exécuté que s'il existe une liaison de réseau entre le client (101) et le serveur (103) et que s'il a été constaté, sur la base d'une interrogation du serveur (103), que la marque d'affranchissement n'a pas encore été imprimée.

13. Procédé selon l'une des revendications 8 à 12, **caractérisé en ce qu'**il est vérifié, à l'autre étape de contrôle, s'il existe un accès au réseau.

14. Procédé selon l'une des revendications 8 à 12, **caractérisé en ce qu'**est effectuée, à l'autre étape de contrôle, une interrogation du serveur (103) lors de laquelle il est vérifié si des contenus du document intelligent ont déjà été imprimés une fois.

15. Produit de programme informatique, **caractérisé en ce qu'**il contient un programme informatique pour exécuter un procédé selon l'une des revendications précédentes.

16. Dispositif permettant d'exécuter le procédé selon la revendication 1 destiné à la génération d'un document intelligent sur un serveur comprenant une base de données (108) pour enregistrer une remarque relative à une impression d'une marque d'affranchissement, la base de données (108) comprenant respectivement une entrée pour chaque marque d'affranchissement générée et transmise à un client (101) et le document intelligent comprenant un programme qui, en présence d'une condition, peut être exécuté au moyen d'un environnement d'exécution de programme contenu dans un programme de représentation et qui contient des contenus pouvant être représentés au moyen du programme de représentation pour représentation sur un dispositif d'affichage (104) du client, les contenus étant composés de contenus statiques et de contenus dynamiques et étant transmis séparément les uns des autres du serveur (103) au client (101) sur un réseau (102), le dispositif étant aménagé pour introduire dans le document intelligent un module de programme qui est démarré automatiquement après l'ouverture du document intelligent dans le programme de représentation en présence de l'environnement d'exécution de programme et qui est conçu pour générer une mention représentable d'un résultat d'une étape de contrôle pour contrôler la présence de la condition au sein du document intelligent, la mention représentable d'un résultat négatif de l'étape de contrôle visant à établir si l'environnement d'exécution de programme est disponible étant introduite dans le document intelligent dès la génération du document intelligent, et le contrôle étant effectué par le fait que le module de programme peut être exécuté ou non et que le module de programme convertit la mention du résultat négatif de l'étape de contrôle en la mention d'une exécution réussie de l'étape de contrôle lorsque le module de programme est exécuté, la mention représentable d'un résultat négatif étant, en l'absence de l'environnement d'exécution de programme, affichée dans le programme de représentation sur le dispositif d'affichage (104) du client (101).
